# EUROPÄISCHE PATENTANMELDUNG

(11) **EP 3 531 195 A1**
(43) Veröffentlichungstag der Anmeldung: **28.08.2019**
(21) Anmeldenummer: 18159008.4
(22) Anmeldetag: 27.02.2018
(51) Int. Cl.: G02C 7/02, B29D 11/00, C23C 14/00, G02B 1/118, G03F 7/00, G02B 27/00

(54) **BRILLENGLAS UMFASSEND WENIGSTENS EINE NANOSTRUKTURIERTE UND/ODER MIKROSTRUKTURIERTE SCHICHT**

(71) Anmelder: Carl Zeiss Vision International GmbH, 73430 Aalen (DE)
(72) Erfinder: LLOBERA, Adan Andreu, 73431 Aalen (DE); BETZLER, Svenja, 73434 Aalen (DE)
(74) Vertreter: Carl Zeiss AG - Patentabteilung

(57) **Zusammenfassung**

Die Erfindung betrifft ein Brillenglas umfassend wenigstens ein Substrat und wenigstens eine nanostrukturierte und/oder mikrostrukturierte Schicht und ein Verfahren zur Herstellung eines solchen Brillenglases.

## Beschreibung

Die Erfindung betrifft ein Brillenglas umfassend wenigstens ein Substrat und wenigstens eine nanostrukturierte und/oder mikrostrukturierte Schicht und ein Verfahren zur Herstellung eines solchen Brillenglases.

Aufgabe der Erfindung war es, ein Brillenglas zur Verfügung zu stellen, dessen funktionale Eigenschaften auf einfache Art und Weise verändert werden kann. Des Weiteren war es Aufgabe der der Erfindung, ein Verfahren zur Herstellung eines solchen Brillenglases zur Verfügung zu stellen.

Die Aufgabe wurde gelöst durch Bereitstellung eines Brillenglases umfassend wenigstens ein Substrat und wenigstens eine nanostrukturierte und/oder mikrostrukturierte Schicht.

Bevorzugte Weiterbildungen des erfindungsgemäßen Brillenglases sind in den Ansprüchen 2 bis 12 angegeben.

Des Weiteren wurde die Aufgabe gelöst durch Bereitstellen eines Verfahrens gemäß Anspruch 13 und die Verwendung einer nanostrukturierten und/oder mikrostrukturierten Schichtgemäß Anspruch 15.

Zu den funktionalen Eigenschaften eines Brillenglases, welche erfindungsgemäß eingestellt und/oder verändert werden können, zählen unter anderem, dass die Oberfläche des Brillenglases nicht beschlägt, nicht vereist, sich selbstreinigt, sich selbst repariert, katalytische Eigenschaften, beispielsweise photokatalytische Eigenschaften, aufweist, polarisierend ist, elektrisch leitfähig ist, entspiegelnd wirkt, antibakteriell wirkt und/oder nicht verkratzt. Das Brillenglas kann vorstehend aufgeführte funktionale Eigenschaften jeweils allein oder als Kombination mehrerer Eigenschaften aufweisen. Mittels der erfindungsgemäßen wenigstens einen nanostrukturierte und/oder mikrostrukturierten Schicht können verschiedene der vorstehend aufgeführten funktionalen Eigenschaften gleichzeitig einer Oberfläche verliehen werden, ohne dass hierfür mehrere separate Schichten notwendig sind.

Das zu beschichtende Substrat kann wenigstens ein polymeres Material und/oder wenigstens ein mineralisches Glas umfassen, wobei das polymere Material oder das mineralische Glas jeweils als Brillenglas-Halbfertigprodukt, d.h. als Linsenrohling mit nur einer optisch fertig bearbeiteten Fläche gemäß DIN EN ISO 13666:2013-10, Absatz 8.4.2, oder als fertiges Brillenglas, d.h. als Brillenglas mit zwei fertig bearbeiteten optischen Flächen vor oder nach der Randbearbeitung gemäß DIN EN ISO 13666:2013-10, Absatz 8.4.6, vorliegen kann. Die Brillenglas-Halbfertigprodukte können als Einstärken-Brillenglas-Halbfertigprodukte, Mehrstärlcen-Brillenglas-Halbfertigprodukte oder Gleitsicht-Brillenglas-Halbfertigprodukte gemäß DIN EN ISO 13666:2013-10, Absätze 8.4.3, 8.4.4 und 8.4.5, vorliegen. Bei den fertigen Brillengläsern kann es sich um Einstärken-Brillengläser, Mehrstärken-Brillengläser, Zweistärken-Brillengläser, Dreistärken-Brillengläser, Gleitsicht-Brillengläser oder degressive Brillengläser gemäß DIN EN ISO 13666:2013-10, Absätze 8.3.1, 8.3.2, 8.3.3, 8.3.4, 8.3.5 und 8.3.6 handeln. Die als Substrat einsetzbaren Brillenglas-Halbfertigprodukte bzw. fertigen Brillengläser können beispielsweise auf den in nachstehender Tabelle 1 genannten Grundmaterialien basieren.

**Tabelle 1: Beispiele für Grundmaterialien für Brillenglas-Halbfertigprodukte bzw. fertige Brillengläser**

| Handelsname | Grundmaterial | Mittlerer Brechungsindex n* | Abbe-Zahl v* |
|---|---|---|---|
| CR 39, CR 330, CR 607, CR 630, RAV 700, 7NG, 7AT, 710, 713, 720 | Polyallyldiglycolcarbonat ((P)ADC) | 1,500 | 56 |
| RAVolution | Polyharnstoff / Polyurethan | 1,500 | 54 |
| Trivex | Polyharnstoff / Polyurethan | 1,530 | 45 |
| Panlite, Lexan | Polycarbonat (PC) | 1,590 | 29 |
| MR 6 | Polythiourethan | 1,598 | |
| MR 8 | Polythiourethan | 1,598 | 41 |
| MR 7 | Polythiourethan | 1,664 | 32 |
| MR 10 | Polythiourethan | 1,666 | 32 |
| MR 174 | Polyepisulfid | 1,738 | 32 |
| MGC 1.76 | Polyepisulfid | 1,76 | 30 |
| | Mineral 1.5 | 1,525 | 58 |
| | Mineral 1.6 | 1,604 | 44 |
| | Mineral 1.7 | 1,701 | 39,2 |
| | Mineral 1.8 | 1,802 | 34,4 |
| | Mineral 1.9 | 1,885 | 30 |

| | | | |
|---|---|---|---|
| *Bezogen auf Natrium D-Linie | | | |

Die der optisch fertig bearbeiteten Fläche gegenüberliegende Fläche des Brillenglas-Halbfertigprodukts kann vor oder nach der Beschichtung der optisch fertig bearbeiteten Fläche des Brillenglas-Halbfertigprodukts bevorzugt durch mechanische Bearbeitung, wie beispielsweise Fräsen und/oder Schleifen und/oder Drehen und/oder Polieren, in die zweite optische fertig bearbeitete Fläche überführt werden. Bevorzugt erfolgt diese mechanische Bearbeitung vor der Beschichtung der optisch fertig bearbeiteten Fläche des Brillenglas-Halbfertigprodukts.

Bei dem zu beschichtenden Substrat handelt es sich bevorzugt um ein fertiges Brillenglas. Besonders bevorzugt handelt es sich bei dem zu beschichtenden Substrat um ein fertiges Brillenglas basierend auf wenigstens einem polymeren Material.

Das zu beschichtende Substrat kann keine optische Korrektionswirkung aufweisen. Alternativ kann das zu beschichtende Substrat mit einer optischen Korrektionswirkung und/oder einer Bildfehlerkorrektion für das blickende Auge ausgestattet sein. Unter optischer Korrektionswirkung wird die sphärische Korrektion, die astigmatische Korrektion und die Korrektion der Achslage sowie optional die Korrektion durch ein Prisma mit Basislage verstanden. Diese optische Korrektionswirkung ist herkömmlicherweise für die Ferne in Einstärken-Brillengläsern verwirklicht. Bei Mehrstärken-Brillengläsern, Zweistärken-Brillengläsern, Dreistärken-Brillengläsern, Gleitsicht-Brillengläsern oder degressiven Brillengläsern kann die optische Korrektionswirkung für die Ferne und/oder für die Nähe jeweils eine sphärische Korrektion, eine astigmatische Korrektion, eine Korrektion der Achslage sowie optional eine Korrektion durch ein Prisma mit Basislage beinhalten. Die Bildfehlerkorrektion für das blickende Auge wird, unabhängig davon, ob es sich um eine Bildfehlerkorrektion für die Ferne oder für die Nähe handelt, bevorzugt analog zu Werner Köppen "Konzeption und Entwicklung von Gleitsichtgläsern", Deutsche Optiker Zeitschrift DOZ, Oktober 1995, Seite 42 - 45, berechnet.

Die Herstellung des zu beschichtenden Substrats kann entweder mittels Urformen und anschließender mechanischer Bearbeitung, wie beispielsweise Fräsen und/oder Schleifen und/oder Drehen und/oder Polieren oder, bei auf wenigstens einem polymerem Material basierenden Substraten, mittels eines additiven Herstellungsverfahrens erfolgen. Bei der Herstellung des zu beschichtenden, auf wenigstens einem polymeren Material basierenden Substrats mittels eines additiven Herstellungsverfahrens kann das Substrat einen einheitlichen Brechungsindex oder eine ortsabhängige Brechungsindexverteilung aufweisen. Die ortsabhängige Brechungsindexverteilung wird bevorzugt vorab mittels optischer Rechenprogramme, wie beispielsweise ZEMAX (Firma Zemax LLC), berechnet und optimiert. Für die Berechnung müssen bevorzugt die Position des zu beschichtenden Substrats vor dem dafür vorgesehenen Auge, die Pupillendistanz, die Vorneigung des zu beschichtenden Substrats, der Fassungsscheibenwinkel des zu beschichtenden Substrats sowie die Substratgröße bekannt sein. Darüber hinaus wird, insbesondere bei der Berechnung von Mehrstärken-Brillengläsern, Zweistärken-Brillengläsern, Dreistärken-Brillengläsern, Gleitsicht-Brillengläsern und degressiven Brillengläsern ein Objektabstandsmodell zugrunde gelegt, welches die Position von Objektpunkten im Blickfeld des Brillenträgers relativ zu dessen Augendrehpunkten beschreibt. Ein Gleitsicht-Brillenglas, welches eine ortsabhängige Brechungsindexverteilung aufweist, ist beispielsweise in EP17152384.8 offenbart.

Das zu beschichtende Substrat kann sowohl auf der Vorderfläche, d.h. der objektseitigen Fläche, welche gemäß DIN EN ISO 13666:2013-10, Absatz 5.8, bestimmungsgemäß in der Brille vom Auge abgewandt liegt, als auch auf der Rückfläche, d.h. der augenseitigen Fläche, welche gemäß DIN EN ISO 13666:2013-10, Absatz 5.9, bestimmungsgemäß in der Brille dem Auge zugewandt liegt, wenigstens eine nanostrukturierte und/oder mikrostrukturierte Schicht umfassen. Bevorzugt umfasst das zu beschichtende Substrat sowohl auf der Vorderfläche als auch auf der Rückfläche wenigstens eine nanostrukturierte und/oder mikrostrukturierte Schicht.

Umfasst das zu beschichtende Substrat sowohl wenigstens ein polymeres Material als auch wenigstens ein mineralisches Glas, ist das mineralische Glas bevorzugt als Dünnstglas und das polymere Material bevorzugt als Brillenglas-Halbfertigprodukt oder als fertiges Brillenglas oder als wenigstens eine Kunststofffolie ausgebildet. Umfasst bei dieser Ausführungsform das zu beschichtende Substrat wenigstens ein Dünnstglas und wenigstens eine Kunststofffolie, ist die wenigstens eine Kunststofffolie bevorzugt zwischen wenigstens zwei Dünnstgläsern angebracht. Die wenigstens eine Kunststofffolie basiert bevorzugt auf Polyethylen, Polypropylen, Polyethylenterephthalat, Polycarbonat, Polymethylmethacrylat, Polyvinylchlorid, Polyvinylacetat, Polyvinylbutyrat und/oder Mischungen hiervon. Die wenigstens eine Kunststofffolie kann beispielsweise mit Cellulosetriacetat stabilisiert werden. Die wenigstens eine Kunststofffolie kann eingefärbt oder nicht eingefärbt sein. Soll das zu beschichtende, wenigstens eine Kunststofffolie umfassende Substrat eingefärbt sein, ist bevorzugt die Kunststoffolie eingefärbt. Die wenigstens eine Kunststofffolie weist bevorzugt eine mittlere Dicke aus einem Bereich von 9 µm bis 205 µm, besonders bevorzugt aus einem Bereich von 14 µm bis 103 µm auf. Wenigstens ein Dünnstglas kann sich bei dieser Ausführungsform auf der Vorderfläche und/oder auf der Rückfläche des fertigen Brillenglases befinden. Bevorzugt befindet sich wenigstens ein Dünnstglas sowohl auf der Vorderfläche als auch auf der Rückfläche des fertigen Brillenglases. Bei der Verwendung eines Brillenglas-Halbfertigprodukts als polymeres Material wird bei dieser Ausführungsform zunächst die optisch nicht fertig bearbeitete Fläche bearbeitet und dann die Vorderfläche und/oder die Rückfläche des so erhaltenen fertigen Brillenglases mit wenigstens einem Dünnstglas verbunden. Alternativ wird bei der Verwendung eines Brillenglas-Halbfertigprodukts als polymeres Material das wenigstens eine Dünnstglas mit der bereits fertig bearbeiteten optischen Fläche verbunden, die optisch nicht fertig bearbeitete Fläche bearbeitet und diese bearbeitete Fläche optional anschließend mit wenigstens einem weiteren Dünnstglas verbunden. Die Verbindung mit wenigstens einem weiteren Dünnstglas ist hierbei bevorzugt. Bevorzugt handelt es sich bei der fertig bearbeiteten optischen Fläche des Brillenglas-Halbfertigprodukts um dessen Vorderfläche und bei der optisch nicht fertig bearbeiteten Fläche um dessen Rückfläche. Alternativ zu der Überführung der optisch nicht fertig bearbeiteten Fläche in eine zweite optisch fertig bearbeitete Fläche und deren Verbindung mit wenigstens einem Dünnstglas kann diese zweite Fläche mit wenigstens einer Beschichtung versehen werden. Diese Beschichtung wird bevorzugt aus der Gruppe bestehend aus wenigstens einer nanostrukturierten und/oder mikrostrukturierten Schicht, wenigstens einer Hartlackschicht, wenigstens einer Entspiegelungsschicht, wenigstens einer Antibeschlagsschicht, wenigstens einer elektrisch leitfähigen oder elektrisch halbleitenden Schicht und wenigstens einer Clean-Coat-Schicht ausgewählt. Besonders bevorzugt ist wenigstens eine nanostrukturierte und/oder mikrostrukturierte Schicht als Beschichtung.

Das wenigstens eine, mit der Vorderfläche des fertigen Brillenglases verbundene Dünnstglas kann identisch oder verschieden, beispielsweise in Bezug auf die Glaskomposition, die mittlere Dicke und/oder die Form, zu dem wenigstens einen, mit der Rückfläche des fertigen Brillenglases verbundenen Dünnstglas sein. Gleiches gilt auch bei der Verwendung eines Brillenglas-Halbfertigprodukts oder einer Kunststofffolie als polymeres Material. Bei Verwendung eines Brillenglas-Halbfertigprodukts wird hierbei die optisch nicht fertig bearbeitete Fläche vor der Verbindung mit wenigstens einem Dünnstglases in eine optisch fertig bearbeitete Fläche überführt.
Die Verbindung des wenigstens einen Dünnstglases mit der optisch fertig bearbeiteten Fläche, bevorzugt der Vorderfläche, des Brillenglas-Halbfertigprodukts bzw. mit einer der fertig bearbeiteten optischen Flächen, bevorzugt der Vorderfläche, des fertigen Brillenglases erfolgt bevorzugt stoffschlüssig und formschlüssig. Bevorzugt wird die Rückfläche des wenigstens einen Dünnstglases mit der optisch fertig bearbeiteten Vorderfläche des Brillenglas-Halbfertigprodukts bzw. des fertigen Brillenglases verbunden. Die Rückfläche des wenigstens einen Dünnstglases und/oder die optisch fertig bearbeitete Vorderfläche des Brillenglas-Halbfertigprodukts bzw. des fertigen Brillenglases kann mit wenigstens einer Beschichtung versehen sein. Diese wenigstens eine Beschichtung kann wenigstens eine farbgebende Schicht, wenigstens eine photochrome Schicht und/oder wenigstens eine polarisierende Schicht umfassen. Die wenigstens eine farbgebende Schicht umfasst bevorzugt eine färbbare Schicht gemäß US 4,355,135 A, insbesondere gemäß Anspruch 1 der US 4,355,135 A, gemäß US 4,294,950 A, insbesondere gemäß einem der Ansprüche 1 oder 6 der US 4,294,9_50 A, oder gemäß US 4,211,823 A, insbesondere gemäß einem der Ansprüche 1 oder 2 der US 4,211,823 A. Besonders bevorzugt umfasst die farbgebende Schicht eine färbbare Schicht gemäß US 4,3_55,135 A. Die wenigstens eine photochrome Schicht umfasst bevorzugt eine Schicht gemäß US 2006/0269741 A1, insbesondere gemäß US 2006/0269741 A1, Anspruch 6, oder eine Schicht gemäß US 2004/0220292 A1, insbesondere gemäß US 2004/0220292 A1, Anspruch 1. Die wenigstens eine photochrome Schicht weist bevorzugt eine mittlere Dicke aus einem Bereich von 5 µm bis 200 µm, weiter bevorzugt aus einem Bereich von 9 µm bis 166 µm, besonders bevorzugt aus einem Bereich von 17 µm bis 121 µm und ganz besonders bevorzugt aus einem Bereich von 21 µm bis 81 µm auf. Die wenigstens eine polarisierende Schicht umfasst bevorzugt entweder eine Polarisationsfolie oder eine Schicht mit polarisierenden Eigenschaften. Als Polarisationsfolie kann eine Folie aus beispielsweise Polyvinylalkohol oder Polyethylenterephthalat eingesetzt werden, welche dichroitische Farbmittel umfasst. Die Polarisationsfolie kann einen einschichtigen oder mehrschichtigen Folienaufbau aufweisen. Die Polarisationsfolie kann passgenau zur Rückfläche des wenigstens einen Dünnstglases vorgeformt vorliegen. Bevorzugt wird die Polarisationsfolie unter Anlegen von Vakuum unter Zuhilfenahme einer Metallform vorgeformt. Eine Schicht mit polarisierenden Eigenschaften ist beispielsweise in EP 1 965 235 A1, EP 0 217 502 A1, EP 1 674 898 A1, US 2006/0066947 A1, WO 2005/050265 A1, WO 2009/029198 A1, WO 2009/156784 A1 oder WO 2015/160612 A1 offenbart. In vorstehend genannten Anmeldungen ist die Schicht mit polarisierenden Eigenschaften jeweils Bestandteil einer dort beschriebenen Schichtenfolge. Im Rahmen dieser Erfindung wird vorzugsweise nur die in den genannten Anmeldungen beschriebene Schicht mit polarisierenden Eigenschaften als polarisierende Schicht eingesetzt.
Bevorzugt ist zwischen der Rückfläche des wenigstens einen Dünnstglases und der optisch fertig bearbeiteten Vorderfläche des Brillenglas-Halbfertigprodukts bzw. des fertigen Brillenglases nur eine einzige Schicht, ausgewählt aus wenigstens einer farbgebenden Schicht, wenigstens einer photochromen Schicht und wenigstens einer polarisierenden Schicht, vorhanden. Sind mehrere Schichten zwischen der Rückfläche des wenigstens einen Dünnstglases und der optisch fertig bearbeiteten Vorderfläche des Brillenglas-Halbfertigprodukts bzw. des fertigen Brillenglases vorhanden, liegen diese in nachstehenden bevorzugten Reihenfolgen von augenseitig nach objektseitig vor:
Dünnstglas / photochrome Schicht / polarisierende Schicht / farbgebende Schicht / Brillenglas-Halbfertigprodukt bzw. fertiges Brillenglas oder
Dünnstglas / photochrome Schicht / farbgebende Schicht / polarisierende Schicht / Brillenglas-Halbfertigprodukt bzw. fertiges Brillenglas oder
Dünnstglas / polarisierende Schicht / farbgebende Schicht / Brillenglas-Halbfertigprodukt bzw. fertiges Brillenglas.
Wird wenigstens eine Kunststofffolie als polymeres Material verwendet, ist die vorstehend beschriebene wenigstens eine farbgebende Schicht, wenigstens eine photochrome Schicht und/oder wenigstens eine polarisierende Schicht bevorzugt auf der Rückfläche des Dünnstglases aufgebracht. Umfasst die Rückfläche des Dünnstglases mehrere dieser Schichten ist deren Reihenfolge zwischen Dünnstglas und der wenigstens einen Kunststofffolie entsprechend der vorstehend beschriebenen Reihenfolge zwischen Dünnstglas und Brillenglas-Halbfertigprodulct bzw. fertigem Brillenglas.
Die optionale, bevorzugte Verbindung der zweiten fertig bearbeiteten optischen Fläche des Brillenglas-Halbfabrikats bzw. des fertigen Brillenglases mit wenigstens einem weiteren Dünnstglas erfolgt bevorzugt ebenfalls stoffschlüssig und formschlüssig. Bevorzugt wird hierbei die optisch fertig bearbeitete Rückfläche des Brillenglas-Halbfabrikats bzw. des fertigen Brillenglases mit der Vorderfläche des wenigstens einen Dünnstglases verbunden. Die optisch fertig bearbeitete Rückfläche des Brillenglas-Halbfertigprodukts bzw. des fertigen Brillenglases und/oder die Vorderfläche des wenigstens einen Dünnstglases kann mit wenigstens einer Beschichtung versehen sein. Diese wenigstens eine Beschichtung umfasst bevorzugt eine farbgebende Schicht. Die farbgebende Schicht wurde bereits vorstehend definiert. Alternativ zu der Verbindung der optisch fertig bearbeiteten Rückfläche des Brillenglas-Halbfertigprodukts bzw. der Rückfläche des fertigen Brillenglases mit wenigstens einem Dünnstglas kann die jeweilige Rückfläche mit wenigstens einer Beschichtung versehen werden. Diese Beschichtung wird bevorzugt aus der Gruppe bestehend aus wenigstens einer nanostrukturierten und/oder mikrostrukturierten Schicht, wenigstens einer Hartlackschicht, wenigstens einer Entspiegelungsschicht, wenigstens einer Antibeschlagsschicht, wenigstens einer elektrisch leitfähigen oder elektrisch halbleitenden Schicht und wenigstens einer Clean-Goat-Schicht ausgewählt. Besonders bevorzugt umfasst die Beschichtung wenigstens eine nanostrukturierte und/oder mikrostrukturierte Schicht.

Die Beschichtung der Vorderfläche und/oder der Rückfläche des wenigstens einen Dünnstglases kann jeweils mittels eines PVD-Verfahrens und/oder eines Schleuderbeschichtungsverfahrens erfolgen. Die anschließende Aushärtung der im Schleuderbeschichtungsverfahren erhaltenen Beschichtung kann entweder thermisch oder strahlungshärtend erfolgen. Bevorzugt erfolgt die Aushärtung dieser Beschichtung strahlungshärtend.
Die Verbindung der jeweils optisch fertig bearbeiteten Fläche des Brillenglas-Halbfertigprodukts bzw. der wenigstens einen fertig bearbeiteten optischen Fläche des fertigen Brillenglases bzw. der wenigstens einen Kunststofffolie jeweils mit dem wenigstens einen Dünnstglas erfolgt bevorzugt mittels eines Klebemittels. Das Klebemittel kann hierbei beispielsweise als Primer oder Ausgleichsmaterial für die unterschiedliche Wärmeausdehnung der einzelnen Komponenten dienen. Weiterhin kann über die Auswahl des Klebemittels eine Angleichung eines gegebenenfalls vorhandenen Brechungsindexunterschieds Δn_{D} der einzelnen Komponenten zueinander erzielt werden. Vorzugsweise erfolgt hierbei nicht nur die Angleichung des Brechungsindex n_{D}, sondern auch die Angleichung der Abbe-Zahl, so dass die Änderung des Brechungsindex der einzelnen Komponenten über das sichtbare Spektrum hinweg gleich ist. Einsetzbare Klebemittel sind beispielsweise in der DE 10 2012 210 185 A1, der WO 2009/056196 A1 oder der WO 2015/121341 A1 beschrieben. Bevorzugt werden die einzelnen Komponenten mittels eines Klebemittels basierend auf einer aminkatalysierten Thiolhärtung von Epoxidharzen analog WO 2015/121341 A1, insbesondere analog Anspruch 1 der WO 2015/121341 A1, bei einer Temperatur aus einem Bereich von 20°C bis 80°C, bevorzugt aus einem Bereich von 40°C bis 70°C und besonders bevorzugt aus einem Bereich von 45°C bis 65°C miteinander verbunden.
Zwischen der, der fertig bearbeiteten optischen Fläche zugewandten Oberfläche des wenigstens einen Dünnstglases und der fertig bearbeiteten optischen Fläche kann wenigstens eine Schicht vorhanden sein. Diese wenigstens eine Schicht weist bevorzugt die gleiche Oberflächentopographie wie die jeweils darunter liegende Oberfläche, auf die diese wenigstens eine Schicht aufgebracht wurde, auf. Geringfügige Abweichungen in der Oberflächentopographie der beiden zusammenzufügenden Oberflächen können beispielsweise mittels eines Klebemittels verfüllt werden. Für eine formschlüssige Verbindung der jeweiligen Oberflächen ist es bevorzugt, dass die Krümmungsradien der jeweils miteinander zu verbindenden Komponenten bevorzugt weniger als 1 mm, weiter bevorzugt in einem Bereich von 0,03 mm bis ≤ 0,8 mm, besonders bevorzugt in einem Bereich von 0,04 mm bis ≤ 0,7 mm und ganz besonders bevorzugt in einem Bereich von 0,05 mm bis ≤ 0,6 mm voneinander abweichen.
Bevorzugt weisen das wenigstens eine Dünnstglas sowie das Brillenglas-Halbfertigprodukt bzw. das fertige Brillenglas vor dem Zusammenfügen mittels eines Klebemittels einen identischen Durchmesser auf. Bevorzugt weist die wenigstens eine Kunststofffolie einen Durchmesser auf, welcher ausreichend groß ist, dass die wenigstens eine Kunststofffolie die Vorderfläche des augenseitigen Dünnstglases und die Rückfläche des objektseitigen Dünnstglases komplett bedeckt. Etwaig überstehende Kunststofffolie wird bevorzugt abgeschnitten. Für den Fall, dass die wenigstens eine Kunststofffolie bereits den gleichen Krümmungsradius wie das hiermit zu verbindende Dünnstglas aufweist, weist die wenigstens eine Kunststofffolie den identischen Durchmesser wie das Dünnstglas auf.
Das wenigstens eine Dünnstglas kann auf diversen Glaskompositionen, wie beispielsweise Borosilikatglas, Aluminium-Borosilikatglas oder alkalifreiem Borosilikatglas, basieren. Bevorzugt basiert das wenigstens eine Dünnstglas auf einem Borosilikatglas oder einem Aluminium-Borosilikatglas.
Das wenigstens eine Dünnstglas weist bevorzugt eine mittlere Dicke aus einem Bereich von 10 µm bis 1000 µm, weiter bevorzugt aus einem Bereich von 13 µm bis 760 µm, weiter bevorzugt aus einem Bereich von 16 µm bis 510 µm, besonders bevorzugt aus einem Bereich von 18 µm bis 390 µm und ganz besonders bevorzugt aus einem Bereich von 19 µm bis 230 µm auf. Insbesondere bevorzugt weist das wenigstens eine Dünnstglas eine mittlere Dicke aus einem Bereich von 21 µm bis 121 µm auf. Unter der mittleren Dicke des wenigstens einen Dünnstglases wird das arithmetische Mittel verstanden, sofern nicht anders angeben. Unterhalb einer mittleren Dicke von 10 µm ist das wenigstens eine Dünnstglas mechanisch zu instabil, um mit der jeweils fertig bearbeiteten optischen Fläche des Brillenglas-Halbfertigprodukts bzw. des fertigen Brillenglases bzw. um mit wenigstens einer Kunststofffolie, verbunden werden zu können, ohne dass das wenigstens eine Dünnstglas zerbricht. Oberhalb einer mittleren Dicke von 1000 µm kann das wenigstens eine Dünnstglas bei Verwendung eines Brillenglas-Halbfertigprodukts bzw. eines fertigen Brillenglases, jeweils als Substrat, zu Brillengläsern führen, welche eine zu große Randdicke oder eine zu große Mittendicke aufweisen würden. Auch bei der Verwendung wenigstens einer Kunststofffolie als Substrat kann die Verwendung von wenigstens einem Dünnstglas mit einer mittleren Dicke von ≥ 1000 nm zu Brillengläsern führen, welche insgesamt zu dick und zu schwer werden, so dass auf diese Weise durch die Verwendung des wenigstens einen Dünnstglases in Bezug auf das Gewicht kein Vorteil gegenüber einem auf mineralischem Glas basierenden Brillenglas erzielt werden kann. Die mittlere Dicke des wenigstens einen Dünnstglases wird bevorzugt mit dem Messgerät Filmetrics F10-HC (Firma Filmetrics Inc.) vermessen. Die mittlere Dicke des wenigstens einen Dünnstglases wird bevorzugt anhand des wenigstens einen Dünnstglases vor dem Verbinden mit dem jeweiligen Substrat bestimmt. Alternativ kann die mittlere Dicke des wenigstens einen Dünnstglases mittels einer rasterelektronenmikroskopischen Aufnahme anhand eines Querschliffs bestimmt werden. Dies kann entweder anhand eines Querschliffs des wenigstens einen Dünnstglases oder anhand eines Querschliffs des Brillenglases umfassend das jeweilige Substrat und wenigstens ein Dünnstglas. Hierzu wird jeweils die Dicke des wenigstens einen Dünnstglases an wenigstens drei Stellen bestimmt und statistisch gemittelt. Die relative Standardabweichung der Dickenverteilung des wenigstens einen Dünnstglases liegt bevorzugt bei 0,1% bis 100%, bevorzugt bei 0,2% bis 81%, besonders bevorzugt bei 0,3% bis 66% und ganz besonders bevorzugt bei 0,4% bis 24%. Die relative Standardabweichung in [%] ist dabei der Quotient aus berechneter Standardabweichung und mittlerer Dicke.
Das wenigstens eine Dünnstglas weist bevorzugt eine Oberflächenrauigkeit Ra von < 1 nm auf. Weiter bevorzugt liegt die Oberflächenrauigkeit Ra des wenigstens einen Dünnstglases in einem Bereich von 0,1 nm bis 0,8 nm, besonders bevorzugt in einem Bereich von 0,3 nm bis 0,7 nm und ganz besonders bevorzugt in einem Bereich von 0,4 nm bis 0,6 nm. Vorstehend genannte Werte für die Oberflächenrauigkeit Ra beziehen sich jeweils auf die Vorderfläche und die Rückfläche des wenigstens einen nicht umgeformten, planen Dünnstglases. Nach einer Umformung gelten vorstehend genannte Werte jeweils bevorzugt nur für diejenige Oberfläche des wenigstens einen Dünnstglases, welche nicht mit dem zur Umformung verwendeten Formkörper in Kontakt gebracht wurde. In Abhängigkeit von dem zur Umformung eingesetzten Formkörper können vorstehend genannte Werte auch für die Oberfläche des wenigstens einen Dünnstglases gelten, welche mit dem zur Umformung eingesetzten Formkörper in Kontakt war. Die Oberflächenrauigkeit Ra des wenigstens einen Dünnstglases wird bevorzugt mittels Weißlichtinterferometrie, bevorzugt mit dem Gerät NewView 7100, Firma Zygo Corporation, bestimmt. Weist das wenigstens eine Dünnstglas weitere oberflächliche Unebenheiten auf, so kann die flächenmäßige Analyse der jeweiligen Oberfläche weiterhin durch phasenmessende Deflektometrie, bevorzugt mit dem Gerät SpecGage (Firma 3D-Shape GmbH), bestimmt werden.
Die Transformationstemperatur T_{G} des wenigstens einen Dünnstglases liegt bevorzugt in einem Bereich von 400°C bis 800°C, weiter bevorzugt in einem Bereich von 430°C bis 770°C, besonders bevorzugt in einem Bereich von 490°C bis 740°C und ganz besonders bevorzugt in einem Bereich von 530°C bis 730°C. Die Transformationstemperatur T_{G} des wenigstens einen Dünnstglases kann jeweils mittels dynamisch-mechanischer Analyse, bevorzugt mit dem Messgerät DMA 8000 Dynamic Mechanical Analyzer (Firma Perkin Elmer Inc.), oder mittels dynamischer Differenzkalorimetrie, bevorzugt mit dem Messgerät DSC204CEL mit Controller TASC414/3A oder CC2001 (jeweils Firma Erich NETZSCH GmbH & Co. Holding KG), bestimmt werden. Bevorzugt wird die Transformationstemperatur T_{G} des wenigstens einen Dünnstglases mittels dynamischer Differenzkalorimetrie bestimmt.
Der Ausdehnungskoeffizient des wenigstens einen Dünnstglases liegt bevorzugt in einem Bereich von 1,8·10⁻⁶K⁻¹ bis 9,1·10⁻⁶K⁻¹, weiter bevorzugt in einem Bereich von 2,1·10⁻⁶K⁻¹ bis 8,8·10⁻⁶K⁻¹, besonders bevorzugt in einem Bereich von 2,6·10⁻⁶K⁻¹ bis 8,2·10⁻⁶K⁻¹ und ganz besonders bevorzugt in einem Bereich von 3,0·10⁻⁶K⁻¹ bis 7,4·10⁻⁶K⁻¹, jeweils bezogen auf den Temperaturbereich von 20°C bis 300°C. Der Ausdehnungskoeffizient des wenigstens einen Dünnstglases wird bevorzugt mittels Dilatometrie, bevorzugt mit dem Messgerät DIL 402 E/7 (Firma Erich NETZSCH GmbH & Co. Holding KG), erfasst. Das wenigstens eine Dünnstglas kann wenigstens ein Farbmittel oder kein Farbmittel umfassen. Bevorzugt umfasst das wenigstens eine Dünnstglas kein Farbmittel.
Weiterhin bevorzugt liegt die Transmission des wenigstens einen Dünnstglases ohne Farbmittel im Wellenlängenbereich von 400 nm bis 800 nm bei ≥ 90%, besonders bevorzugt bei ≥ 92%. Die Transmission des wenigstens einen Dünnstglases wird bevorzugt mittels eines UV/VIS Spektralphotometers, bevorzugt mit dem Messgerät LAMBDA 950 UV/Vis/NIR Spectrophotometer (Firma Perkin Elmer Inc.), bestimmt.
Das wenigstens eine Dünnstglas weist bevorzugt einen Brechungsindex aus einem Bereich von n = 1,490 bis n = 1,950, weiter bevorzugt aus einem Bereich von n = 1,501 bis n = 1,799, besonders bevorzugt aus einem Bereich von n = 1,510 bis n = 1,755 und ganz besonders bevorzugt aus einem Bereich von n = 1,521 bis n= 1,747 auf, wobei der Brechungsindex für die Wellenlänge der Natrium-D-Linie angeben ist. Der Brechungsindex des wenigstens einen Dünnstglases ist bevorzugt an die jeweils direkt angrenzende Beschichtung angepasst. An den jeweiligen Grenzflächen Dünnstglas/ Beschichtung oder Dünnstglas/ Klebemittel oder Dünnstglas/ Substrat ist der Brechungsindexunterschied jeweils bevorzugt kleiner als 0,03, besonders bevorzugt kleiner als 0,01. Bevorzugt weisen das wenigstens eine Dünnstglas, das Substrat, das oder die optional verwendete(n) Klebemittel sowie sämtliche Beschichtungen, ausgenommen der Entspiegelungsschicht, einer mehrschichtigen Verspiegelungsscchicht und der nanostrukturierten und/oder mikrostrukturierten Schicht, den gleichen Brechungsindex auf. Hierbei wird unter gleichem Brechungsindex ein Brechungsindexunterschied aus einem Bereich von 0,005 bis 0,015 toleriert. Der Brechungsindex wird vorzugsweise refraktometrisch an den jeweiligen Bestandteilen des Brillenglases separat bestimmt. Als Messgerät kann beispielsweise das Gerät Anton Paar Abbemat MW (Firma Anton Paar GmbH) eingesetzt werden.
Das wenigstens eine Dünnstglas weist bevorzugt eine Abbezahl aus einem Bereich von 20 bis 85, weiter bevorzugt aus einem Bereich von 23 bis 74, besonders bevorzugt aus einem Bereich von 29 bis 66 und ganz besonders bevorzugt aus einem Bereich von 33 bis 61 auf. Bevorzugt weisen das wenigstens eine Dünnstglas, das Substrat, das oder die optional verwendete(n) Klebemittel sowie sämtliche vorhandenen Beschichtungen ausgenommen der Entspiegelungsschicht einer mehrschichtigen Verspiegelungsscchicht und der nanostrukturierten und/oder mikrostrukturierten Schicht, die gleiche Abbezahl auf. Unter gleicher Abbezahl wird ein Unterschied der Abbezahl aus einem Bereich von 0,1 bis 5, bevorzugt aus einem Bereich von 0,1 bis 2,1 toleriert. Je höher der Brechungsindex sämtlicher Bestandteile des Brillenglases ist, desto größere Unterschiede der Abbezahl werden toleriert. Bevorzugt weist das wenigstens eine Dünnstglas sowie das Substrat jeweils bei einem gegebenen Brechungsindex n eine möglichst hohe Abbezahl auf.
Das wenigstens eine Dünnstglas kann eine Transformationstemperatur T_{G} aus einem Bereich von 421°G bis 781 °C, bevorzugt aus einem Bereich von 501°C bis 766°C, sowie für den Temperaturbereich von 20°C bis 300°C jeweils einen Ausdehnungskoeffizienten aus einem Bereich von 2,9·10⁻⁶K⁻¹ bis 8,3·10⁻⁶K⁻¹, bevorzugt aus einem Bereich von 3,1·10⁻⁶K⁻¹ bis 7,3·10⁻⁶K⁻¹, aufweisen.
Das wenigstens eine Dünnstglas kann eine mittlere Dicke aus einem Bereich von 17 µm bis 190 µm, bevorzugt aus einem Bereich von 24 µm bis 166 µm, sowie eine Transformationstemperatur T_{G} aus einem Bereich von 510°C bis 730°C, bevorzugt aus einem Bereich von 555°C bis 721°C, aufweisen. Dünnstgläser sind beispielsweise kommerziell erhältlich unter den Bezeichnungen D 263® T eco, D 263® LA eco, D 263® M, AF 32® eco, SCHOTT AS 87 eco, B 270® i, jeweils Fa. Schott AG, Corning Willow Glass oder Corning Gorilla Glass, jeweils Fa. Corning Inc.
Das wenigstens eine Dünnstglas kann mit unterschiedlichen Formgebungen, beispielsweise plan oder in einer bestimmten Form vorliegen. Im Zusammenhang mit der Form des wenigstens einen Dünnstglases wird unter "plan" verstanden, dass das wenigstens eine Dünnstglas keine makroskopisch sichtbare Biegung oder Krümmung aufweist. Weist das wenigstens ein Dünnstglas eine nicht plane Oberfläche auf, kann eine gewünschte Oberflächentopographie, beispielsweise sphärisch oder torisch, durch Verformen eines planen Dünnstglases auf einer entsprechenden Negativform erreicht werden. Beispielsweise kann das wenigstens eine Dünnstglas in Form einer sphärischen Linse mit einem bestimmten Krümmungsradius ausgestaltet sein. Zur Umformung eines planen Dünnstglases kann dieses zunächst, bevorzugt in Form eines Kreises, beispielsweise mittels eines Lasers, ausgeschnitten werden. Im Randbereich kann dieser ausgeschnittene Dünnstglaskreis anschließend abgeflammt werden, um eventuell entstandene Mikrorisse zu versiegeln. Um möglichst wenig Dünnstglasverschnitt zu erzeugen, wird der Ausschnitt des Dünnstglases so ausgewählt, dass nach dem Zusammenfügen des wenigstens einen Dünnstglases mit wenigstens einer Oberfläche des Substrats möglichst wenig, bevorzugt kein übersehendes Dünnstglas, entfernt werden muss. Das ausgeschnittene Dünnstglas kann beispielsweise auf eine zur Umformung geeignete Formschale gelegt, gegebenenfalls mittels einer Halterung befestigt, und vorzugsweise zusammen mit der Formschale, gegebenenfalls zusammen mit der Halterung, bis zur Transformationstemperatur T_{G} der Glaskomposition oder bis zu einer Temperatur, welche vorzugsweise maximal 20°C über der Transformationstemperatur T_{G} der Glaskomposition liegt, erwärmt werden. Die Formschale kann beispielsweise konvex oder konkav ausgeformt sein. Beispielsweise wird das ausgeschnittene Dünnstglas mit Hilfe eines zur Formschale passenden Gegenstücks in diese hinein gedrückt oder der Dünnstglasausschnitt wird unter Anlegen von Vakuum und/oder einfach mittels Schwerkraft in die Formschale geformt. Bevorzugt ist eine Umformung des Dünnstglases, unter Anlegen von Vakuum in eine Formschale. Das umgeformte Dünnstglas wird vorzugsweise komplett in oder über der Formschale abkühlen gelassen, bevor es von der Formschale getrennt wird. Die Umformung eines vorzugsweise planen Ausschnitts eines Dünnstglases erfolgt vorzugsweise in einer Schutzgasatmosphäre. Die Formschale kann hierbei als Negativform der bei der Umformung zu erzielenden Vorderfläche oder Rückfläche des Dünnstglases ausgestaltet sein. Beispielsweise kann die Formschale sphärisch, asphärisch rotationssymmetrisch, torisch, atorisch, als symmetrische Freiformfläche oder unsymmetrische Freiformfläche ausgeformt sein. Alternativ kann das Dünnstglas in nicht zugeschnittener Form, vorzugsweise planer Form, mit Hilfe eines Thermoformprozesses umgeformt werden.
Der Krümmungsradius des wenigstens einen Dünnstglases liegt bevorzugt in einem Bereich von 10 mm bis unendlich, bevorzugt in einem Bereich von 20 mm bis 1600 mm, weiter bevorzugt in einem Bereich von 35 mm bis 1535 mm, weiter bevorzugt in einem Bereich von 56 mm bis 600 mm, besonders bevorzugt in einem Bereich von 66 mm bis 481 mm und ganz besonders bevorzugt in einem Bereich von 75 mm bis 376 mm. Ein Krümmungsradius des wenigstens einen Dünnstglases von unendlich entspricht hierbei einer planen Oberfläche. Bei nicht sphärischen Oberflächen des wenigstens einen Dünnstglases beziehen sich die vorstehend angegebenen Krümmungsradien jeweils auf eine angenäherte sphärische Form.
Die zur Umformung einsetzbare Formschale umfasst vorzugsweise ein Material, welches sich spanend bearbeiten lässt, keine Strukturen im umgeformten Dünnstglas hervorruft und darüber hinaus mit dem Dünnstglas keine untrennbare Verbindung eingeht. Die Formschale kann beispielsweise aus Graphit, einer Metall(legierung) oder einer Keramik, wie beispielsweise in WO 20061050891 A2 beschrieben, bestehen. Die Formschale kann weiterhin oberflächenmodifiziert sein, so dass eine Anhaftung des Dünnstglases weiter minimiert wird.

Das wenigstens eine Dünnstglas kann auf der jeweils substratabgewandten Oberfläche mit wenigstens einer nanostrukturierten und/oder mikrostrukturierten Schicht, wenigstens einer Entspiegelungsschicht und/oder mit wenigstens einer Clean-Coat-Schicht belegt sein. Objektseitig ist die substratabgewandte Oberfläche des wenigstens einen Dünnstglases dessen Vorderfläche, augenseitig dessen Rückfläche. Bevorzugt umfasst das wenigstens eine Dünnstglas auf der jeweils substratabgewandten Oberfläche wenigstens eine nanostrukturierte und/oder mikrostrukturierte Schicht, wenigstens eine Entspiegelungsschicht und wenigstens eine Clean-Coat-Schicht, wobei die Clean-Coat-Schicht bevorzugt die am weitesten vom Substrat entfernte Schicht darstellt. Ganz besonders bevorzugt umfasst das wenigstens eine Dünnstglas wenigstens eine nanostrukturierte und/oder mikrostrukturierte Schicht. Die Beschichtung der jeweils substratabgewandten Oberfläche des wenigstens einen Dünnstglases kann jeweils mittels eines PVD-Verfahrens und/oder eines Schleuderbeschichtungsverfahrens erfolgen. Die anschließende Aushärtung der im Schleuderbeschichtungsverfahren erhaltenen Beschichtung kann entweder thermisch oder strahlungshärtend erfolgen. Bevorzugt erfolgt die Aushärtung dieser Beschichtung strahlungshärtend.

Erfindungsgemäß umfasst das zu beschichtende Substrat wenigstens eine nanostrukturierte und/oder mikrostrukturierte Schicht. Die wenigstens eine nanostrukturierte und/oder mikrostrukturierte kann auf wenigstens einer optisch fertig bearbeiteten Fläche des Brillenglas-Halbfertigprodukts oder des fertigen Brillenglases oder auf einer zu beschichtenden Oberfläche eines Dünnstglases oder auf wenigstens einer auf dem Substrat vorhandenen Beschichtung vorliegen. Die nanostrukturierte und/oder mikrostrukturierte Schicht bildet auf der zu beschichtenden Oberfläche eine strukturierte Oberfläche aus. Die strukturierte Oberfläche kann hierbei eine regelmäßige oder eine unregelmäßige Struktur umfassen. Die strukturierte Oberfläche wird bevorzugt mittels einer Maskierung der jeweils zu beschichtenden Oberfläche erzielt. Zur Maskierung der zu beschichtenden Oberfläche wird bevorzugt wenigstens eine Lage von Nanopartikeln und/oder Mikropartikeln verwendet. Bei der wenigstens einen Lage von Nanopartikeln und/oder Mikropartikeln handelt es sich bevorzugt um eine Doppelschicht oder um eine Monolage von Nanopartikeln und/oder Mikropartikeln, besonders bevorzugt um eine Monolage von Nanopartikeln und/oder Mikropartikeln. Insbesondere ist es bevorzugt wenigstens eine Monolage sich selbst organisierender Nanopartikel und/oder Mikropartikel auf der jeweils zu beschichtenden Oberfläche zu immobilisieren. Diese wenigstens eine Lage von Nanopartikeln und/oder Mikropartikeln wird anschließend mit wenigstens einer Schicht beschichtet. Hierbei bedeckt ein Teil dieser wenigstens einen Schicht die Nanopartikel und/oder Mikropartikel der wenigstens einen Lage und ein Teil dieser wenigstens einen Schicht gelangt auf die jeweils zu beschichtende Oberfläche. Die mit wenigstens einer Schicht beschichteten Nanopartikel und/oder Mikropartikel werden anschließend entfernt. Auf diese Weise bleibt eine nanostrukturierte und/oder mikrostrukturierte Oberfläche auf der jeweils zu beschichtenden Oberfläche zurück. Diese zurückbleibende nanostrukturierte und/oder mikrostrukturierte Oberfläche wird auch als nanostrukturierte und/oder mikrostrukturierte Schicht oder strukturierte Oberfläche oder strukturierte Schicht bezeichnet. Die nanostrukturierte und/oder mikrostrukturierte Schicht entsteht also bevorzugt dadurch, dass auf eine zu beschichtende Oberfläche an derjenigen Stelle, an der ein Nanopartikel und/oder Mikropartikel auf der zu beschichtenden Oberfläche immobilisiert ist, und an derjenigen Stelle der zu beschichtenden Oberfläche, welche durch den immobilisierten Nanopartikel und/oder Mikropartikel maskiert und/oder abgeschattet ist, keine weitere Schicht aufgebracht werden kann. Bei der zu beschichtenden Oberfläche kann es sich um wenigstens eine optisch fertig bearbeitete Fläche des Substrats oder um wenigstens eine Oberfläche einer auf dem Substrat vorliegenden Beschichtung oder um die zu beschichtende Oberfläche eines Dünnstglases handeln. Bevorzugt ist zur Herstellung der nanostrukturierten und/oder mikrostrukturierten Schicht derjenige Teil der zu beschichtenden Oberfläche, welcher eine nanostrukturierte und/oder mikrostrukturierten Schicht umfassen soll, mit immobilisierten Nanopartikeln und/oder Mikropartikeln maskiert. Diese mit immobilisierten Nanopartikeln und/oder Mikropartikeln maskierte, zu beschichtende Oberfläche wird bevorzugt mit wenigstens einer Schicht belegt und die immobilisierten, mit wenigstens einer Schicht belegten, Nanopartikel und/oder Mikropartikel werden anschließend entfernt. Nach Entfernung der Nanopartikel und/oder Mikropartikel wird eine nanostrukturierte und/oder mikrostrukturierte Schicht erhalten, welche die zu beschichtende Oberfläche bedingt durch die zur Maskierung und/oder Abschattung eingesetzten Nanopartikel und/oder Mikropartikel, insbesondere deren Form und deren Partikelgröße, nicht durchgehend bzw. nicht vollständig belegt. Nicht durchgehend bzw. nicht vollständig belegt bezieht sich in diesem Zusammenhang nur auf die durch die Maskierung und/oder Abschattung entstandenen Lücken oder Freiräume der nanostrukturierten und/oder mikrostrukturierten Schicht, nicht auf die Belegung der zu beschichtenden Oberfläche mit der wenigstens einen nanostrukturierten und/oder mikrostrukturierten Schicht. Durch die Lücken oder Freiräume der nanostrukturierten und/oder mikrostrukturierten Schicht kann bevorzugt mittels einer lichtmikroskopischen Aufnahme oder mittels einer rasterelektronenmikroskopischen Aufnahme die zu beschichtende Oberfläche erkannt werden. Die nanostrukturierte und/oder mikrostrukturierte Schicht kann über die komplette zu beschichtende Oberfläche oder nur einen Teilbereich derselben angeordnet sein. Die nanostrukturierte und/oder mikrostrukturierte Schicht kann des Weiteren mit wenigstens einer weiteren Schicht beschichtet werden.

Mit nanostrukturierter und/oder mikrostrukturierten Schicht ist im Rahmen dieser Erfindung eine Schicht gemeint, welche auf einer zu beschichtenden Oberfläche eine Zwischenraumstruktur innerhalb wenigstens einer Lage von Nanopartikeln und/oder Mikropartikeln, ausbildet. Diese Zwischenraumstruktur bildet sich bevorzugt innerhalb einer Doppelschicht oder innerhalb einer Monolage jeweils von Nanopartikeln und/oder Mikropartikeln bevorzugt nur an denjenigen Stellen aus, an denen sich die Nanopartikel und/oder Mikropartikel nicht berühren. Die zu beschichtende Oberfläche kann vollständig oder teilweise mit wenigstens einer Lage von Nanopartikeln und/oder Mikropartikeln belegt sein. In wenigstens einer Lage von Nanopartikeln und/oder Mikropartikeln können die Nanopartikel und/oder Mikropartikel in einer dichtest möglichen Anordnung oder statistisch verteilt vorliegen. Bevorzugt sind in einer Monolage von Nanopartikeln und/oder Mikropartikeln die einzelnen Nanopartikel und/oder Mikropartikel so angeordnet, dass sie sich nur berühren, aber nicht überlappen. Im Fall von kreisförmigen Nanopartikeln und/oder Mikropartikeln ist deren Anordnung in der Monolage bei idealer Anordnung vergleichbar mit einer hexagonal dichtesten Kugelpackung, bei dem jeder kreisförmige Nanopartikel und/oder Mikropartikel jeweils von sechs weiteren kreisförmigen Nanopartikeln und/oder Mikropartikeln umringt ist. In diesem Fall berührt jeder kreisförmige Nanopartikel und/oder Mikropartikel an sechs Stellen seine jeweils weiteren kreisförmigen benachbarten Nanopartikel und/oder Mikropartikel nicht. An genau diesen sechs Stellen ist nach Entfernung der Nanopartikel und/oder Mikropartikel dann die nanostrukturierte und/oder mikrostrukturierte Schicht zu finden. Die vorstehend genannten sechs Stellen werden immer in Bezug auf nur einen einzelnen Nanopartikel und/oder Mikropartikel gezählt, ein direkt benachbarter Nanopartikel und/oder Mikropartikel berührt bei dieser Zählweise somit seine jeweils sechs weiteren kreisförmigen benachbarten Nanopartikel und/oder Mikropartikel an sechs Stellen nicht. An den berührungsfreien Stellen zwischen den Nanopartikeln und/oder Mikropartikeln befindet sich wiederum die nanostrukturierte und/oder mikrostrukturierte Schicht, welche eine regelmäßige Struktur auf dem wenigstens einen, mit Nanopartikeln und/oder Mikropartikeln maskierten und/oder abgeschatteten Teilbereich der zu beschichtenden Oberfläche ausbildet.
Die wenigstens eine nanostruktuierte und/oder mikrostrukturierte Schicht kann als Zwischenraumstruktur sowohl entlang der zu beschichtenden Oberfläche als auch entlang der Normalen der zu beschichtenden Oberfläche ausgebildet sein.

Die sich ausbildende Zwischenraumstruktur der nanostrukturierten und/oder mikrostrukturierten Schicht ist neben den in der Lage von Nanopartikeln und/oder Mikropartikeln eingesetzten Nanopartikeln und/oder Mikropartikeln, insbesondere deren Form und deren Partikelgröße, auch von der Richtung, aus der die wenigstens eine Schicht auf die wenigstens eine Lage von Nanopartikeln und/oder Mikropartikeln aufgebracht wird, abhängig. Bevorzugt wird die wenigstens eine Lage von Nanopartikeln und/oder Mikropartikeln mit wenigstens einer Schicht beschichtet, wobei hierfür ein Beschichtungswinkel von 15° bis 90°, bezogen auf den Mittelpunkt der zu beschichtenden Oberfläche, besonders bevorzugt ist.

Zur Maskierung der zu beschichtenden Oberfläche mit wenigstens einer Lage von Nanopartikeln und/oder Mikropartikeln, bevorzugt mit wenigstens einer Monolage oder wenigstens einer Doppelschicht jeweils von Nanopartikeln und/oder Mikropartikeln, besonders bevorzugt mit wenigstens einer Monolage von Nanopartikeln und/oder Mikropartikeln, können Nanopartikel und/oder Mikropartikel basierend auf unterschiedlichen Materialien und/oder mit unterschiedlicher Form und/oder mit unterschiedlicher Partikelgröße verwendet werden. Die zur Maskierung der zu beschichtenden Oberfläche mit wenigstens einer Lage von Nanopartikeln und/oder Mikropartikeln einsetzbaren Nanopartikel und/oder Mikropartikel können beispielsweise kugelförmig, oval, vieleckig, dreieckig, viereckig, rechteckig, sechseckig, achteckig, stäbchenförmig, sternförmig und/oder in Form der von dem jeweiligen Nanopartikel und/oder Mikropartikel ausgebildeten Kristallstruktur vorliegen. Bevorzugt werden zur Maskierung der zu beschichtenden Oberfläche mit wenigstens einer Lage von Nanopartikeln und/oder Mikropartikeln kugelförmige, ovale und/oder stäbchenförmige Nanopartikel und/oder Mikropartikel eingesetzt. Besonders bevorzugt werden zur Maskierung der zu beschichtenden Oberfläche mit wenigstens einer Lage von Nanopartikeln und/oder Mikropartikeln kugelförmige Nanopartikel eingesetzt.
Als Nanopartikel und/oder Mikropartikel können hierbei Kern-Hülle-Partikel, Janus-Partikel, Trägerpartikel, Nanopartikel und/oder Mikropartikel basierend auf wenigstens einem polymeren Material, Nanopartikel und/oder Mikropartikel basierend auf wenigstens einem Metalloxid, Metallhydroxid und/oder Metalloxidhydrat und/oder Nanopartikel und/oder Mikropartikel basierend auf wenigstens einem Metall eingesetzt werden.
Als Nanopartikel und/oder Mikropartikel basierend auf einer Kern-Hülle-Struktur können beispielsweise Nanopartikel und/oder Mikropartikel mit einem Kern umfassend wenigstens ein Metalloxid, Metallhydroxid und/oder Metalloxidhydrat aus oder mit Titan, bevorzugt TiO₂, und/oder aus oder mit Zirkonium, bevorzugt ZrO₂, und/oder aus oder mit Silizium, bevorzugt SiO₂, und/oder mit einem Kern umfassend wenigstens ein Metall, bevorzugt Gold, und/oder mit einem Kern umfassend wenigstens ein polymeres Material, bevorzugt Polystyrol. Die Hülle der Nanopartikel und/oder Mikropartikel mit einer Kern-Hülle-Struktur kann beispielsweise wenigstens ein Metalloxid, Metallhydroxid und/oder Metalloxidhydrat aus oder mit Silizium, bevorzugt SiO₂, und/oder aus oder mit Titan, bevorzugt TiO₂, und/oder wenigstens ein Metall, bevorzugt Kupfer, Silber und/oder Gold, und/oder wenigstens ein Farbmittel umfassende Hülle umfassen. Hierbei umfassen der Kern und die Hülle der auf einer Kern-Hülle-Struktur basierenden Nanopartikel und/oder Mikropartikel bevorzugt nicht die identische Zusammensetzung. Eine Ausnahme hiervon liegt beispielsweise für den Fall vor, dass eine Vielzahl kleinerer Nanopartikel als Hülle einen größeren Nanopartikel als Kern oder eine Vielzahl kleinerer Mikropartikel als Hülle einen größeren Mikropartikel als Kern oder eine Vielzahl Nanopartikel als Hülle einen Mikropartikel als Kern umhüllt. Als Nanopartikel und/oder Mikropartikel basierend auf einer Kern-Hülle-Struktur werden bevorzugt Nanopartikel und/oder Mikropartikel mit einem Kern umfassend wenigstens ein Metalloxid, Metallhydroxid und/oder Metalloxidhydrat aus oder mit Silizium, bevorzugt SiO₂, und/oder umfassend ein polymeres Material, bevorzugt Polystyrol, und mit einer Hülle umfassend wenigstens ein Metall, bevorzugt Aluminium, Silber und/oder Gold, verwendet. Die vorstehend erwähnte Hülle umfassend wenigstens ein Metall kann hierbei auch einen einschichtigen oder mehrschichtigen Aufbau umfassen. Beispielsweise kann der Kern zunächst mit einer Aluminiumhülle und anschließend noch mit einer Goldhülle umgeben sein. Weiterhin bevorzugt werden als Nanopartikel und/oder Mikropartikel basierend auf einer Kern-Hülle-Struktur Nanopartikel und/oder Mikropartikel mit einem Kern umfassend wenigstens ein Metalloxid, Metallhydroxid und/oder Metalloxidhydrat aus oder mit Silizium, bevorzugt SiO₂, und/oder umfassend wenigstens ein polymeres Material, bevorzugt Polystyrol, und einer Hülle umfassend wenigstens ein Metalloxid, Metallhydroxid und/oder Metalloxidhydrat aus oder mit Titan, bevorzugt TiO₂, und/oder wenigstens ein Metall, bevorzugt Gold, eingesetzt. Weiterhin bevorzugt werden als Nanopartikel und/oder Mikropartikel basierend auf einer Kern-Hülle-Struktur Nanopartikel und/oder Mikropartikel mit einem Kern umfassend wenigstens ein polymeres Material, bevorzugt Polystyrol, und einer, wenigstens ein Farbmittel umfassenden Hülle eingesetzt. Weiterhin bevorzugt werden als Nanopartikel und/oder Mikropartikel basierend auf einer Kern-Hülle-Struktur Nanopartikel und/oder Mikropartikel mit einem Kern umfassend wenigstens ein Metall, bevorzugt Gold, und einer kleinere Partikel als der Kern umfassenden Hülle eingesetzt, wobei die kleineren Partikel wenigstens ein Metalloxid, Metallhydroxid und/oder Metalloxidhydrat aus oder mit Silizium, bevorzugt SiO₂, und/oder aus oder mit Titan, bevorzugt TiO₂, umfassen. Als Nanopartikel und/oder Mikropartikel basierend auf einer Kern-Hülle-Struktur werden bevorzugt kugelförmige Kern-Hülle-Partikel eingesetzt.

Als Nanopartikel und/oder Mikropartikel basierend auf Janus-Partikeln können beispielsweise kugelförmige, ovale, vieleckige, dreieckige, viereckige, rechteckige, stäbchenförmige und/oder sternförmige Janus-Partikel eingesetzt werden. Bevorzugt werden kugelförmige, ovale und/oder stäbchenförmige, besonders bevorzugt kugelförmige Janus-Partikel eingesetzt. Als kugelförmige Janus-Partikel werden bevorzugt Kugeln umfassend wenigstens ein polymeres Material, bevorzugt Polystyrol, und/oder umfassend wenigstens ein Metalloxid, Metallhydroxid und/oder Metalloxidhydrat aus oder mit Silizium, bevorzugt SiO₂, welche teilweise, bevorzugt hälftig mit wenigstens einem Metall, bevorzugt Aluminium, Silber und/oder Gold, beschichtet sind, eingesetzt. Ist die teilweise, bevorzugt hälftig beschichtete Kugel sowohl mit Aluminium als auch mit Gold oder sowohl mit Silber als auch mit Gold beschichtet, ist die Goldschicht bevorzugt die der Kugel abgewandte Schicht. Als kugelförmige Janus-Partikel werden weiterhin bevorzugt Kugeln umfassend wenigstens ein Metall, bevorzugt Gold, welche teilweise, bevorzugt hälftig mit wenigstens einem Metalloxid, Metallhydroxid und/oder Metalloxidhydrat aus oder mit Silizium, bevorzugt SiO₂ und/oder aus oder mit Titan, bevorzugt TiO₂, beschichtet sind, eingesetzt. In letzterem Fall kann die Beschichtung mit wenigstens einem Metalloxid, Metallhydroxid und/oder Metalloxidhydrat wenigstens eine durchgehende Schicht oder einzelne Partikel, welche kleiner als die zu beschichtende Kugel sind, umfassen. Als kugelförmige Janus-Partikel werden weiterhin bevorzugt Kugeln umfassend wenigstens ein polymeres Material, bevorzugt Polystyrol, welche teilweise, bevorzugt hälftig mit wenigstens einer Farbmittel umfassenden Schicht belegt sind, eingesetzt.

Als Nanopartikel und/oder Mikropartikel basierend Trägerpartikel können Partikel, welche beispielsweise mit einem polymeren Material befüllt werden können, eingesetzt werden.

Als Nanopartikel und/oder Mikropartikel basierend auf wenigstens einem polymeren Material können beispielsweise Nanopartikel umfassend Polyethylen, Polypropylen, Polystyrol und/oder Polymethylmethacrylat verwendet werden. Bevorzugt werden Polyethylen, Polypropylen, Polystyrol umfassende Nanopartikel und/oder Mikropartikel, besonders bevorzugt Polystyrol umfassende Nanopartikel und/oder Mikropartikel eingesetzt.

Als Nanopartikel und/oder Mikropartikel basierend auf wenigstens einem Metalloxid, Metallhydroxid und/oder Metalloxidhydrat können beispielsweise Nanopartikel basierend auf wenigstens einem Metalloxid, Metallhydroxid und/oder Metalloxidhydrat aus oder mit Titan, bevorzugt TiO₂ Nanopartikel, aus oder mit Silizium, bevorzugt SiO₂ Nanopartikel, aus oder mit Zirkonium, bevorzugt ZrO₂, aus oder mit Zinn, bevorzugt SnO₂, aus oder mit Antimon, bevorzugt Sb₂O₃, aus oder mit Eisen, bevorzugt Fe₃O₄ und/oder Fe₂O₃, aus oder mit Zinn, bevorzugt SnO und/oder SnO₂, aus oder mit Nickel, bevorzugt NiO, aus oder mit Molybdän, bevorzugt MoO₃, aus oder mit Cer, bevorzugt CeO₂, aus oder mit Yttrium, bevorzugt Y₂O₃, aus oder mit Kupfer, bevorzugt CuO und/oder aus oder mit Aluminium, bevorzugt Al₂O₃ oder AlO(OH), eingesetzt werden. Bevorzugt kommen Nanopartikel und/oder Mikropartikel basierend auf wenigsten einem Metalloxid, Metallhydroxid, Metalloxidhydrat aus oder mit Titan, Silizium, Eisen, Cer, Kupfer und/oder Zirkonium zum Einsatz. Besonders bevorzugt kommen Nanopartikel und/oder Mikropartikel basierend auf wenigsten einem Metalloxid, Metallhydroxid, Metalloxidhydrat aus oder mit Titan, Silizium und/oder Zirkonium zum Einsatz.

Als Nanopartikel und/oder Mikropartikel basierend auf wenigstens einem Metall können beispielsweise Nanopartikel aus oder mit Eisen, Aluminium, Gold, Kupfer, Nickel, Silber, Zink, Ytterbium, Chrom, Molybdän, Zinn, Palladium, Platin, Germanium, Gallium, Kobalt, Kadmium und/oder Mischungen hiervon und/oder Legierungen hiervon eingesetzt werden. Bevorzugt kommen auf wenigstens einem Metall basierende Nanopartikel und/oder Mikropartikel aus oder mit Aluminium, Gold, Kupfer, Silber, Platin und/oder Zink zum Einsatz. Besonders bevorzugt kommen auf wenigstens einem Metall basierende Nanopartikel und/oder Mikropartikel aus oder mit Aluminium, Gold und/oder Silber zum Einsatz.

Als Nanopartikel und/oder Mikropartikel, welche in einer Kristallstruktur vorliegen, können beispielsweise mit Bor dotierte Diamantpartikel zur Maskierung der zu beschichtenden Oberfläche eingesetzt werden.

Bevorzugt werden zur Maskierung der zu beschichtenden Oberfläche mit wenigstens einer Lage von Nanopartikeln und/oder Mikropartikeln Nanopartikel und/oder Mikropartikel basierend auf wenigstens einem polymeren Material, auf Trägerpartikeln und/oder Janus-Partikeln, besonders bevorzugt basierend auf wenigstens einem polymeren Material und/oder Janus-Partikeln eingesetzt.

Die Nanopartikel und/oder Mikropartikel können oberflächenmodifiziert sein.

Die zur Maskierung der zu beschichtenden Oberfläche in wenigstens einer Lage einsetzbaren kugelförmigen, vieleckigen, dreieckigen, viereckigen, rechteckigen, sechseckigen, achteckigen, sternförmigen Nanopartikel und/oder Mikropartikel weisen bevorzugt eine mittlere Partikelgröße aus einem Bereich von 0,001 µm bis 1000 µm, weiter bevorzugt aus einem Bereich von 0,005 µm bis 250 µm, weiter bevorzugt aus einem Bereich von 0,009 µm bis 150 µm, besonders bevorzugt aus einem Bereich von 0,01 µm bis 120 µm und ganz besonders bevorzugt aus einem Bereich von 0,011 µm bis 60 µm auf. Insbesondere bevorzugt weisen die einsetzbaren Nanopartikel und/oder Mikropartikel eine mittlere Partikelgröße aus einem Bereich von 0,01 µm bis 5 µm oder von 0,01 µm bis 0,025 µm auf. Zur Bestimmung der mittleren Partikelgröße der Nanopartikel und/oder Mikropartikel wird bevorzugt das Gerät Zetasizer Nano ZS der Firma Malvern verwendet.

Die Länge der stächenförmigen und ovalen Nanopartikel und/oder Mikropartikel liegt bevorzugt in einem Bereich von 1 nm bis 135 nm, besonders bevorzugt in einem Bereich von 5 nm bis 100 nm.
Die Breite der stächenförmigen und ovalen Nanopartikel und/oder Mikropartikel liegt bevorzugt in einem Bereich von 1 nm bis 65 nm, besonders bevorzugt in einem Bereich von 5 nm bis 50 nm. Zur Bestimmung der Länge und Breite der Nanopartikel und/oder Mikropartikel wird bevorzugt das Gerät Zetasizer Nano ZS der Firma Malvern verwendet.

Die Nanopartikel und/oder Mikropartikel können entweder in Reinform oder als Suspension auf die zu beschichtende Oberfläche aufgebracht werden. Bevorzugt werden die Nanopartikel und/oder Mikropartikel als Suspension auf die zu beschichtende Oberfläche aufgebracht. Die Nanopartikel und/oder Mikropartikel können in einem polaren oder unpolaren Lösungsmittel suspendiert sein. Die Nanopartikel und/oder Mikropartikel können beispielsweise in Wasser, Alkohol oder Öl suspendiert vorliegen.

Die wenigstens eine Lage von Nanopartikeln und/oder Mikropartikeln kann unter Zuhilfenahme einer Schüttelplatte, mittels Sprühbeschichtung, Schleuderbeschichtung oder Tauchbeschichtung auf die zu beschichtende Oberfläche aufgebracht werden. Die wenigstens eine Lage von Nanopartikeln und/oder Mikropartikel kann von einer anderen Oberfläche auf die zu beschichtende Oberfläche überführt werden. In letzterem Fall kann nach Beschichtung der wenigstens einen Lage mit wenigstens einer Schicht, beispielsweise die Beschichtung eines Janus-Partikels nicht zusammen mit dem Janus-Partikel entfernt werden. Stattdessen verbleibt die Beschichtung des Janus-Partikel auf der zu beschichtenden Oberfläche zurück.

Vor Belegung der zu beschichtenden Oberfläche mit wenigstens einer Lage von Nanopartikeln und/oder Mikropartikeln kann die zu beschichtende Oberfläche vorab aktiviert werden. Die Aktivierung der zu beschichtenden Oberfläche kann mittels Plasma, durch chemische Aktivierung, beispielsweise mit einer Alkalilauge oder mit einer anorganischen Säure, und/oder durch Reibung erfolgen. Bevorzugt erfolgt die Aktivierung der zu beschichtenden Oberfläche mittels Plasma.

Der mit wenigstens einer Lage von Nanopartikeln und/oder Mikropartikeln zu belegende Teilbereich der zu beschichtenden Oberfläche kann beispielsweise durch Bedrucken der Oberfläche eingeschränkt werden. In diesem Fall kann auf die bedruckte Oberfläche keine Lage von Nanopartikeln und/oder Mikropartikeln aufgebracht werden. Nach Entfernen der bedruckten Oberfläche kann die darunter liegende Oberfläche und der mit wenigstens einer Lage von Nanopartikeln und/oder Mikropartikeln belegte Teilbereich der zu beschichtenden Oberfläche mit wenigstens einer Schicht beschichtet werden. Zum Bedrucken der zu beschichtenden Oberfläche kann beispielsweise eine Tintenstrahldrucktinte, bevorzugt basierend auf Wachsbasis, verwendet werden. Alternativ kann die zu beschichtende Oberfläche durch das Bedrucken mit beispielsweise einer Tintenstrahltinte in einzelne Teilbereiche eingeteilt werden, welche dann mit wenigstes einer Lage von Nanopartikeln und/oder Mikropartikeln ausgefüllt werden können. Eine derartige Einteilung der zu beschichtenden Oberfläche kann beispielsweise bei gekrümmten Oberfläche die Belegung mit wenigstens einer Lage von Nanopartikeln und/oder Mikropartikeln erleichtern. Die zur Einteilung der zu beschichtenden Oberfläche vorgenommene Bedruckung wird bevorzugt vor einer weiteren Beschichtung entfernt. Weiterhin ist es bevorzugt, dass die zur Einteilung der zu beschichtenden Oberfläche vorgenommene Bedruckung mit einer sehr geringen Linienstärke bzw. Linienweite erfolgt.

Die Begriffe "Schicht" und "Beschichtung" werden im Rahmen dieser Erfindung austauschbar verwendet.

Unter Beschichtung der wenigstens einen Lage von Nanopartikeln und/oder Mikropartikeln wird verstanden, dass die Beschichtung sowohl auf den, auf der zu beschichtenden Oberfläche immobilisierten, Nanopartikeln und/oder Mikropartikeln als auch auf dem Teilbereich der zu beschichtenden Oberfläche abgeschieden wird, welcher sich in den Zwischenräumen zwischen den immobilisierten Nanopartikeln und/oder Mikropartikeln befindet und/oder welcher nicht von immobilisierten Nanopartikeln und/oder Mikropartikeln während des Beschichtungsvorgangs maskiert und/oder abgeschattet wird.

Unter einer Lage von Nanopartikeln und/oder Mikropartikeln wird die vollständige Belegung der zu beschichtenden Oberfläche mit Nanopartikeln und/oder Mikropartikeln verstanden. Bei der Lage von Nanopartikeln und/oder Mikropartikeln handelt es sich bevorzugt um eine Monolage oder um eine Doppelschicht, besonders bevorzugt um eine Monolage. Bei der vollständigen Belegung der zu beschichtenden Oberfläche sind die Nanopartikel und/oder Mikropartikel bevorzugt aneinander angrenzend, aber in einer Monolage bevorzugt nicht überlappend, angeordnet. Bei der vollständigen Belegung der zu beschichtenden Oberfläche mit einer Doppelschicht sind die Nanopartikel und/oder Mikropartikel sowohl in derjenigen Schicht der Doppelschicht, welche direkt angrenzend an die zu beschichtende Oberfläche ist als auch in derjenigen Schicht der Doppelschicht, welche nicht direkt angrenzend an die zu beschichtende Oberfläche ist, bevorzugt aneinander angrenzend, aber bevorzugt nicht überlappend, angeordnet. Unter vollständiger Belegung der zu beschichtenden Oberfläche wird verstanden, dass bevorzugt weniger als 15%, weiter bevorzugt weniger als 11%, besonders bevorzugt weniger als 8% und ganz besonders weniger als 6%, jeweils der zu beschichtenden Oberfläche nicht von aneinander angrenzenden Nanopartikeln und/oder Mikropartikeln belegt sind. Die Zwischenräume, die sich beispielsweise nur aufgrund der Form und/oder Partikelgröße der direkt aneinander angrenzenden Nanopartikel und/oder Mikropartikel auf der zu beschichtenden Oberfläche ausbilden, sind bei vorstehender Definition der vollständigen Belegung der zu beschichtenden Oberfläche nicht berücksichtigt. Mit anderen Worten werden Zwischenräume, welche bei einer idealen Anordnung der direkt aneinander angrenzenden, in einer Monolage nicht überlappenden Nanopartikel und/oder Mikropartikel aufgrund deren Form und/oder Partikelgröße entstehen, bei vorstehender Definition der zu beschichtenden Oberfläche nicht berücksichtigt. Im Fall von in einer Monolage in einer hexagonal dichtesten Kugelpackung angeordneten kugelförmigen Nanopartikeln und/oder Mikropartikeln sind diese Zwischenräume diejenigen Stellen auf der zu beschichtenden Oberfläche, an welchen sich die kugelförmigen Nanopartikel und/oder Mikropartikel nicht berühren. Bei vorstehender Definition der vollständigen Belegung der zu beschichtenden Oberfläche sind nur diejenigen Teilbereiche der zu beschichtenden Oberfläche berücksichtigt, welche von aneinander angrenzenden Nanopartikeln und/oder Mikropartikeln umringt sind und wobei die um diese Teilbereiche angeordneten Nanopartikel und/oder Mikropartikel jeweils nicht von der maximal mögliche Anzahl an direkt angrenzenden Nanopartikeln und/oder Mikropartikeln umgeben sind. Dies gilt sowohl für eine Monolage als auch für eine Doppleschicht von Nanopartikeln und/oder Mikropartikeln. Im Fall von kugelförmigen Nanopartikeln und/oder Mikropartikeln in einer Monolage sind diese Teilbereiche Bereiche, in denen kugelförmige Nanopartikel und/oder Mikropartikel nicht in einer hexagonal dichtesten Kugelpackung angeordnet sind und somit ein an diesen Teilbereich angrenzender Nanopartikel und/oder Mikropartikel an weniger als sechs benachbarte Nanopartikel und/oder Mikropartikel angrenzt. Die vollständige Belegung der zu beschichtenden Oberfläche wird anhand einer lichtmikroskopischen Aufsicht und/oder einer rasterelektronenmikroskopischen Aufsicht auf eine mit Nanopartikeln und/oder Mikropartikeln belegte Oberfläche ermittelt. Bevorzugt wird die vollständige Belegung der zu beschichtenden Oberfläche anhand einer rasterelektronenmikroskopischen Aufsicht ermittelt. Im Fall einer Doppelschicht wird die direkt an die zu beschichtende Oberfläche angrenzende Schicht zur Beurteilung der vollständigen Belegung herangezogen.
Unter einer Lage von Nanopartikeln und/oder Mikropartikeln wird auch eine nicht vollständige Belegung der zu beschichtenden Oberfläche mit Nanopartikeln und/oder Mikropartikeln verstanden. Bei der nicht vollständigen Belegung der zu beschichtenden Oberfläche grenzen die Nanopartikel und/oder Mikropartikel nicht an einen weiteren Nanopartikel und/oder Mikropartikel an. Bei der nicht vollständigen Belegung sind die Nanopartikel und/oder Mikropartikel entweder statistisch oder in einem regelmäßigen Abstand voneinander auf der zu beschichtenden Oberfläche verteilt. Bevorzugt sind die Nanopartikel und/oder Mikropartikel statistisch auf der zu beschichtenden Oberfläche verteilt. Bei der statistischen Verteilung der Nanopartikel und/oder Mikropartikel ist hierbei nicht ausgeschlossen, dass ein Teil der Nanopartikel und/oder Mikropartikel direkt aneinander angrenzend und ein weiterer Teil der Nanopartikel und/oder Mikropartikel nicht aneinander angrenzend auf der zu beschichtenden Oberfläche vorliegen. Bevorzugt sind bei einer nicht vollständigen Belegung der zu beschichtenden Oberfläche weniger als 6%, weiter bevorzugt weniger als 4%, besonders bevorzugt weniger als 2% der Nanopartikel und/oder Mikropartikel, jeweils bezogen auf die Gesamtanzahl der Nanopartikel und/oder Mikropartikel in einer Lage, direkt aneinander angrenzend angeordnet. Die nicht vollständige Belegung der zu beschichtenden Oberfläche wird anhand einer lichtmikroskopischen Aufsicht und/oder einer rasterelektronenmikroskopischen Aufsicht auf eine mit Nanopartikeln und/oder Mikropartikeln belegte Oberfläche ermittelt. Bevorzugt wird die nicht vollständige Belegung der zu beschichtenden Oberfläche anhand einer rasterelektronenmikroskopischen Aufsicht ermittelt.
Eine Lage von Nanopartikeln und/oder Mikropartikeln kann, unabhängig von der vollständigen oder nicht vollständigen Belegung der zu beschichtenden Oberfläche, Nanopartikel und/oder Mikropartikel unterschiedlicher Art bzw. Zusammensetzung, unterschiedlicher Form und/oder unterschiedlicher Partikelgröße umfassen. Beispielsweise kann eine Lage von Nanopartikel und/oder Mikropartikeln ausschließlich Nanopartikel unterschiedlicher Art, beispielsweise Nanopartikel basierend auf einem polymeren Material und Nanopartikel basierend auf einem Metall, mit identischer Form, beispielsweise kugelförmig, in unterschiedlicher Partikelgröße umfassen.
Nach Belegung der zu beschichtenden Oberfläche mit wenigstens einer Lage von Nanopartikeln und/oder Mikropartikeln kann diese wenigstens eine Lage teilweise abgeschirmt werden und der nicht abgeschirmte Teil der Lage mit Plasma, bevorzugt induktiv gekoppeltem Plasma, behandelt werden. Die Nanopartikel und/oder Mikropartikel verändern durch die Plasmabehandlung ihre mittlere Partikelgröße, bevorzugt wird die mittlere Partikelgröße der Nanopartikel und/oder Mikropartikel durch die Plasmabehandlung verkleinert, so dass auf diese Weise von dem abgeschirmten Teil der wenigstens einen Lage zu dem nicht abgeschirmten Teil der wenigstens einen Lage ein Gradient in Bezug auf die mittlere Partikelgröße der Nanopartikel und/oder Mikropartikel erzeugt werden kann. Anschließend kann diese Lage von Nanopartikeln und/oder Mikropartikeln mit wenigstens einer Schicht beschichtet werden. Durch die Verkleinerung der Nanopartikel und/oder Mikropartikel sind die Zwischenräume zwischen den verkleinerten Nanopartikeln und/oder Mikropartikeln größer als zwischen den nicht verkleinerten Nanopartikeln und/oder Mikropartikeln.
Unabhängig von der vollständigen oder nicht vollständigen Belegung der zu beschichtenden Oberfläche sind die Nanopartikel und/oder Mikropartikel auf der zu beschichtenden Oberfläche immobilisiert und verändern ihre einmal eingenommene Position bei der nachfolgenden Beschichtung mit wenigstens einer weiteren Schicht bevorzugt nicht.
Die jeweils zu beschichtende Oberfläche wird bevorzugt mit wenigstens einer Lage von Nanopartikeln und/oder Mikropartikeln maskiert und mit wenigstens einer weiteren Schicht beschichtet. Nach Entfernen der Nanopartikel und/oder Mikropartikel kann die so erhaltene strukturierte Oberfläche mit wenigstens einer weiteren Schicht beschichtet und/oder mit wenigstens einer weiteren Lage von Nanopartikeln und/oder Mikropartikeln maskiert und mit wenigstens einer weiteren Schicht beschichtet werden. Nach Entfernen der zuletzt zur Maskierung immobilisierten Nanopartikel und/oder Mikropartikel kann der vorstehend beschriebene Beschichtungsvorgang wiederholt werden. Hierbei können die zur Maskierung eingesetzten Nanopartikel und/oder Mikropartikel in Bezug auf ihre Zusammensetzung, ihre Partikelgröße und/oder ihre Form identisch oder verschieden voneinander sein. Beispielsweise kann eine zu beschichtende Oberfläche mit einer Monolage umfassend Mikropartikel mit einer Partikelgröße von 5 µm vollständig belegt und mit einer Entspiegelungsschicht beschichtet werden. Nach Entfernen dieser Mikropartikel mit einer Partikelgröße von 5 µm kann die so erhaltene strukturierte Oberfläche mit einer weiteren Monolage von Nanopartikeln mit einer Partikelgröße von 1 µm vollständig belegt und mit einer weiteren Entspiegelungsschicht beschichtet werden. Die in vorstehendem Beispiel eingesetzten Mikropartikel und Nanopartikel können hierbei eine identische Form, beispielsweise kugelförmig, oder eine voneinander verschiedene Form aufweisen. Weiterhin können die in vorstehendem Beispiel eingesetzten Mikropartikel und Nanopartikel eine identische Zusammensetzung, beispielsweise basierend auf einem polymeren Material, bevorzugt Polystyrol, oder eine nicht identische Zusammensetzung aufweisen.
Das Substrat kann auf der jeweils zu beschichtenden Oberfläche der Vorderfläche und auf der jeweils zu beschichtenden Oberfläche der Rückfläche mit einer voneinander verschiedenen Schichtenfolge belegt sein. Beispielsweise kann eine zu beschichtete Oberfläche der Vorderfläche des Substrats mit einer einzigen Monolage von Nanopartikeln und/oder Mikropartikeln, welche eine vollständige Belegung der zu beschichtenden Oberfläche ausbilden, maskiert sein und eine zu beschichtende Oberfläche der Rückfläche des Substrats einer einzigen Monolage von Nanopartikeln und/oder Mikropartikeln, welche keine vollständige Belegung der zu beschichtenden Oberfläche ausbilden, maskiert sein. Nach der Beschichtung beider Monolagen mit wenigstens einer identischen oder mit wenigstens einer voneinander verschiedenen Schicht und Entfernen der Nanopartikel und/oder Mikropartikel aus der jeweiligen wenigstens einen Schicht, kann beispielsweise nur die auf diese Weise erhaltene strukturierte Oberfläche der Rückfläche mit wenigstens einer weiteren Schicht und/oder beispielsweise mit wenigstens einer weiteren Monolage von Nanopartikeln und/oder Mikropartikeln, welche eine vollständige Belegung der zu beschichtenden Oberfläche ausbilden, maskiert und mit wenigstens einer weiteren Schicht beschichtet werden. Nach Entfernen der Nanopartikel und/oder Mikropartikel aus der zuletzt genannten wenigstens einen weiteren Schicht kann die nun erhaltene strukturierte Oberfläche wiederum mit wenigstens einer weiteren Schicht beschichtet werden. Anstelle einer Monolage kann auch eine Doppelschicht von Nanopartikeln und/oder Mikropartikeln zur Maskierung der zu beschichtenden Oberfläche eingesetzt werden.

Die wenigstens eine Lage von Nanopartikeln und/oder Mikropartikeln wird bevorzugt mit wenigstens einer Schicht beschichtet. Diese wenigstens eine Schicht kann aus der Gruppe bestehend aus wenigstens einer einzelnen Schicht eines Metalloxids, Metallhydroxids und/oder Metalloxidhydrats aus oder mit Silizium, bevorzugt einer einzelnen SiO₂-Schicht oder aus oder mit Titan, bevorzugt einer einzelnen TiO₂-Schicht oder aus oder mit Zirkonium, bevorzugt einer einzelnen ZrO₂-Schicht, wenigstens polarisierenden Schicht, wenigstens einer farbgebenden Schicht, wenigstens einer photochromen Schicht, wenigstens einer Hartlackschicht, wenigstens einer elektrisch leitfähigen oder elektrisch halbleitenden Schicht, wenigstens einer Entspiegelungsschicht, wenigstens einer Verspiegelungsschicht, wenigstens einer Antibeschlagsschicht und wenigstens einer Clean-Coat-Schicht ausgewählt sein. Die wenigstens eine elektrisch leitfähige Schicht oder elektrisch halbleitende Schicht kann hierbei Teil der wenigstens einen Entspiegelungsschicht sein. Bevorzugt handelt es sich bei der wenigstens einen Schicht um wenigstens eine Hartlackschicht, wenigstens eine Entspiegelungsschicht, um wenigstens eine Verspiegelungsschicht und/oder um wenigstens eine Clean-Coat-Schicht. Besonders bevorzugt handelt es sich bei der wenigstens einen Schicht um wenigstens eine Entspiegelungsschicht, wenigstens eine Clean-Coat-Schicht und/oder um wenigstens eine Verspiegelungsschicht.

Die Beschichtung der wenigstens einen Lage von Nanopartikeln und/oder Mikropartikeln kann mittels physikalischer Gasphasenabscheidung (PVD), chemischer Gasphasenabscheidung (CVD), Atomlagenabscheidung (ALD), plasmaunterstützter chemische Gasphasenabscheidung (PECVD), chemischer Gasphasenabscheidung bei Atmosphärendruck (ACVD), metall-organischer chemischer Gasphasenabscheidung (MOCVD) und/oder mittels eines Sol-Gel-Verfahrens erfolgen.

Wird die wenigstens eine Lage von Nanopartikeln und/oder Mikropartikeln, bevorzugt die wenigstens eine Monolage und/oder die wenigstens eine Doppelschicht jeweils von Nanopartikeln und/oder Mikropartikeln, besonders bevorzugt die wenigstens eine Monolage von Nanopartikeln und/oder Mikropartikeln, jeweils mit wenigstens einer polarisierenden Schicht beschichtet, kann diese beispielsweise eine in EP 1 965 235 A1, EP 0 217 502 A1, EP 1 674 898 A1, US 2006/0066947 A1, WO 2005/050265 A1, WO 2009/029198 A1, WO 2009/156784 A1 oder WO 2015/160612 A1 offenbarte Schicht mit polarisierenden Eigenschaften umfassen. In vorstehend genannten Anmeldungen ist die Schicht mit polarisierenden Eigenschaften jeweils Bestandteil einer dort beschriebenen Schichtenfolge. Im Rahmen dieser Erfindung wird vorzugsweise nur die in den genannten Anmeldungen beschriebene Schicht mit polarisierenden Eigenschaften als polarisierende Schicht eingesetzt. Nach Entfernen der Nanopartikel und/oder Mikropartikel umfasst die zu beschichtende Oberfläche die wenigstens eine polarisierende Schicht nur in denjenigen Teilbereichen der zu beschichtenden Oberfläche, welche während des Beschichtungsvorgangs nicht mit Nanopartikeln und/oder Mikropartikeln belegt und/oder welche während des Beschichtungsvorgangs nicht von Nanopartikeln und/oder Mikropartikeln abgeschattet war. Die zu beschichtende Oberfläche kann wenigstens eine farbgebende Schicht, wenigstens eine optisch fertig bearbeitete Fläche des Brillenglas-Halbfertigprodukts oder fertigen Brillenglases und/oder wenigstens eine nicht mit einem Brillenglas-Halbfertigprodukt, nicht mit einem fertiges Brillenglas oder nicht mit wenigstens einer Kunststofffolie verbundene Oberfläche eines Dünnstglases sein. Alternativ zu der vorstehend beschriebenen Beschichtung mit wenigstens einer polarisierenden Schicht kann eine Polarisationsfolie in das Substrat eingebettet oder auf das Substrat aufgebracht werden. Die Polarisationsfolie kann hierbei auf wenigstens einer Oberfläche mit wenigstens einer Lage von Nanopartikeln und/oder Mikropartikeln belegt sein, wobei die Belegung vollständig oder nicht vollständig sein kann. Die mit wenigstens einer Lage von Nanopartikeln und/oder Mikropartikeln belegte Polarisationsfolie kann bei der Herstellung eines Brillenglas-Halbfertigproduktes oder eines fertiges Brillenglases in das Brillenglas-Halbfertigprodukt oder in das fertige Brillenglas eingebettet oder auf die optisch fertig bearbeitete Oberfläche aufgebracht werden. Umfasst das Substrat wenigstens eine zwischen zwei Dünnstgläsern angeordnete Kunststofffolie kann die mit wenigstens einer Lage von Nanopartikeln und/oder Mikropartikeln belegte Polarisationsfolie alternativ oder zusätzlich zur wenigstens einen Kunststofffolie zwischen den beiden Dünnstgläsern, bevorzugt dem Objekt zugewandt, vorliegen. Alternativ kann die mit wenigstens einer Lage von Nanopartikeln und/oder Mikropartikeln belegte Oberfläche der Polarisationsfolie mit wenigstens einer Schicht, beispielsweise mit einer Entspiegelungsschicht, beschichtet sein. Nach Entfernen der Nanopartikel und/oder Mikropartikel kann die so erhaltene Polarisationsfolie wie vorstehend beschrieben in ein Substrat eingebettet oder auf das Substrat aufgebracht werden.

Wird die wenigstens eine Lage von Nanopartikeln und/oder Mikropartikeln, bevorzugt die wenigstens eine Monolage und/oder die wenigstens eine Doppelschicht jeweils von Nanopartikeln und/oder Mikropartikeln, besonders bevorzugt die wenigstens eine Monolage von Nanopartikeln und/oder Mikropartikeln, jeweils mit wenigstens einer farbgebenden Schicht beschichtet, umfasst diese bevorzugt eine färbbare Schicht gemäß US 4,355,135 A, insbesondere gemäß Anspruch 1, gemäß US 4,294,950 A, insbesondere gemäß einem der Ansprüche 1 oder 6 oder gemäß US 4,211,823 A, insbesondere gemäß einem der Ansprüche 1 oder 2. Besonders bevorzugt umfasst die farbgebende Schicht eine färbbare Schicht gemäß US 4,355,135 A. Das zur Einfärbung einsetzbare Farbmittel kann beispielsweise aus der Gruppe bestehend aus C.I. Disperse Yellow 5, C.I. Disperse Yellow 13, C.I. Disperse Yellow 33, C.I. Disperse Yellow 42, C.I. Disperse Yellow 51, C.I. Disperse Yellow 54, C.I. Disperse Yellow 64, C.I. Disperse Yellow 71, C.I. Disperse Yellow 86, C.I. Disperse Yellow 114, C.I. Disperse Yellow 201, C.I. Disperse Yellow 211, C.I. Disperse Orange 30, C.I. Disperse Orange 73, C.I. Disperse Red 4, C.I. Disperse Red 11, C.I. Disperse Red 15, C.I. Disperse Red 55, C.I. Disperse Red 58, C.I. Disperse Red 60, C.I. Disperse Red 73, C.I. Disperse Red 86, C.I. Disperse Red 91, C.I. Disperse Red 92, C.I. Disperse Red 127, C.I. Disperse Red 152, C.I. Disperse Red 189, C.I. Disperse Red 229, C.I. Disperse Red 279, C.I. Disperse Red 302, C.I. Disperse Red 302:1, C.I. Disperse Red 323, C.I. Disperse Blue 27, C.I. Disperse Blue 54, C.I. Disperse Blue 56, C.I. Disperse Blue 73, C.I. Disperse Blue 280, C.I. Disperse Violet 26, C.I. Disperse Violet 33, C.I. Solvent Yellow 179, C.I. Solvent Violet 36, C.I. Pigment Blue 15, C.I. Pigment Blue 80, C.I. Pigment Green 7, C.I. Pigment Orange 36, C.I. Pigment Orange 36, C.I. Pigment Yellow 13, C.I. Pigment Violet 23, C.I. Pigment Violet 37, C.I. Pigment Black 1, C.I. Pigment Black 6 und C.I. Pigment Black 7 ausgewählt sein. Alternativ hierzu kann die wenigstens eine farbgebende Schicht auch mittels einer Farbmittel umfassenden Drucktinte, insbesondere 3D-Drucktinte, auf die Lage von Nanopartikeln und/oder Mikropartikeln aufgebracht werden. Nach Entfernung der Nanopartikel und/oder Mikropartikel umfasst die zu beschichtende Oberfläche die wenigstens eine farbgebende Schicht in denjenigen Teilbereichen der zu beschichtenden Oberfläche, welche während der Aufbringung der wenigstens einen farbgebenden Schicht nicht von Nanopartikeln und/oder Mikropartikeln maskiert und/oder nicht von Nanopartikeln und/oder Mikropartikeln abgeschattet war. Bei der zu beschichtenden Oberfläche kann es sich um wenigstens eine polarisierende Schicht, um wenigstens eine optisch fertig bearbeitete Oberfläche des Brillenglas-Halbfertigprodukts oder fertigen Brillenglases und/oder um wenigstens eine nicht mit einem Brillenglas-Halbfertigprodukt, nicht mit einem fertiges Brillenglas oder nicht mit wenigstens einer Kunststofffolie verbundene Oberfläche eines Dünnstglases handeln.

Wird die wenigstens eine Lage von Nanopartikeln und/oder Mikropartikeln, bevorzugt die wenigstens eine Monolage und/oder die wenigstens eine Doppelschicht jeweils von Nanopartikeln und/oder Mikropartikeln, besonders bevorzugt die wenigstens eine Monolage von Nanopartikeln und/oder Mikropartikeln, jeweils mit wenigstens einer photochromen Schicht beschichtet, umfasst diese bevorzugt wenigstens eine Schicht gemäß US 2006/0269741 A1, insbesondere gemäß US 2006/0269741 A1, Anspruch 6, oder wenigstens eine Schicht gemäß US 2004/0220292 A1, insbesondere gemäß US 2004/0220292 A1, Anspruch 1. Nach Entfernen der Nanopartikel und/oder Mikropartikel umfasst die zu beschichtende Oberfläche die wenigstens eine photochrome Schicht nur in den Zwischenräumen zwischen den Nanopartikeln und/oder Mikropartikeln, welche während der Beschichtung mit der wenigstens einen photochromen Schicht nicht durch die Nanopartikel und/oder Mikropartikel maskiert waren und/oder in den Teilbereichen der zu beschichtenden Oberfläche, welche während der Beschichtung mit der wenigstens einen photochromen Schicht nicht von wenigstens einem Nanopartikel und/oder wenigstens einem Mikropartikel abgeschattet war. Bei der zu beschichtenden Oberfläche kann es sich um wenigstens eine farbgebende Schicht, wenigstens eine polarisierende Schicht, wenigstens optisch fertig bearbeitete Oberfläche des Substrats und/oder um wenigstens eine nicht mit einem Brillenglas-Halbfertigprodukt, nicht mit einem fertiges Brillenglas oder nicht mit wenigstens einer Kunststofffolie verbundene Oberfläche eines Dünnstglases handeln.

Wird die wenigstens eine Lage von Nanopartikeln und/oder Mikropartikeln, bevorzugt die wenigstens eine Monolage und/oder die wenigstens eine Doppelschicht jeweils von Nanopartikeln und/oder Mikropartikeln, besonders bevorzugt die wenigstens eine Monolage von Nanopartikeln und/oder Mikropartikeln, jeweils mit wenigstens einer Hartlackschicht beschichtet, wird für die Herstellung der wenigstens einen Hartlackschicht bevorzugt eine Zusammensetzung gemäß EP 2 578 649 A1, insbesondere gemäß EP 2 578 649 A1, Anspruch 1, eingesetzt. Nach Entfernen der Nanopartikel und/oder Mikropartikel umfasst die zu beschichtende Oberfläche die wenigstens eine Hartlackschicht in den Zwischenräumen zwischen den zur Maskierung immobilisierten Nanopartikeln und/oder Mikropartikeln und/oder in den nicht von den Nanopartikeln und/oder Mikropartikeln abgeschatteten Teilbereichen der zu beschichtenden Oberfläche. Die zu beschichtende Oberfläche kann beispielsweise wenigstens eine photochrome Schicht, wenigstens eine farbgebende Schicht, wenigstens eine optisch fertig bearbeitete Fläche des Brillenglas-Halbfertigprodukts oder fertigen Brillenglases und/oder wenigstens eine nicht mit einem Brillenglas-Halbfertigprodukt, nicht mit einem fertiges Brillenglas oder nicht mit wenigstens einer Kunststofffolie verbundene Oberfläche eines Dünnstglases sein. Alternativ zur vorstehend beschriebenen Beschichtung mit wenigstens einer Hartlackschicht können die Nanopartikel und/oder Mikropartikel der Zusammensetzung für die Herstellung der wenigstens einen Hartlackschicht zugesetzt werden und nach deren Aufbringung aus der wenigstens einen Hartlackschicht entfernt werden.

Wird die wenigstens eine Lage von Nanopartikeln und/oder Mikropartikeln, bevorzugt die wenigstens eine Monolage und/oder die wenigstens eine Doppelschicht jeweils von Nanopartikeln und/oder Mikropartikeln, besonders bevorzugt die wenigstens eine Monolage von Nanopartikeln und/oder Mikropartikeln, jeweils mit wenigstens einer elektrisch leitfähigen oder elektrisch halbleitenden Schicht beschichtet, kann diese beispielsweise wenigstens eine Schicht aus oder mit Indium-Zinn-Oxid (((In₂O₃)_{0.9}(SnO₂)_{0.1}; ITO), Fluor-Zinn-Oxid (SnO₂:F; FTO), Aluminium-Zink-Oxid (ZnO:Al; AZO) und/oder Antimon-Zinn-Oxid (SnO₂:Sb; ATO) umfassen. Bevorzugt umfasst die wenigstens eine elektrisch leitfähige oder elektrisch halbleitende Schicht eine Schicht aus oder mit ITO bzw. aus oder mit FTO. Die wenigstens eine elektrisch leitfähige Schicht oder elektrisch halbleitende Schicht kann eine Schicht der wenigstens einen Entspiegelungsschicht sein. Ist nach Entfernen der Nanopartikel und/oder Mikropartikel die wenigstens eine elektrisch leitfähige oder elektrisch halbleitende Schicht objektseitig oder augenseitig Bestandteil der jeweils substratabgewandt angeordneten äußersten Schicht, wird bevorzugt die statische Aufladung dieser äußersten Schicht vermindert oder vermieden. Dies wiederum erleichtert die Reinigung des so beschichteten erfindungsgemäßen Brillenglases. Mit Bestandteil der jeweils substratabgewandt angeordneten äußersten Schicht ist gemeint, dass die Zwischenräume zwischen den nicht mit Nanopartikeln und/oder Mikropartikeln maskierten Teilbereichen und/oder zwischen den nicht von Nanopartikeln und/oder Mikropartikeln abgeschatteten Teilbereichen der zu beschichteten Oberfläche die wenigstens eine elektrisch leitfähige oder elektrisch halbleitende Schicht umfassen. Bei der zu beschichtenden Oberfläche kann es sich beispielsweise um wenigstens eine Entspiegelungsschicht, um einen Teil der Schichten wenigstens einer Entspiegelungsschicht, um wenigstens eine optisch fertig bearbeitete Fläche des Brillenglas-Halbfertigprodukts oder fertigen Brillenglases und/oder wenigstens eine nicht mit einem Brillenglas-Halbfertigprodukt, nicht mit einem fertiges Brillenglas oder nicht mit wenigstens einer Kunststofffolie verbundene Oberfläche eines Dünnstglases handeln.

Wird die wenigstens eine Lage von Nanopartikeln und/oder Mikropartikeln, bevorzugt die wenigstens eine Monolage und/oder die wenigstens eine Doppelschicht jeweils von Nanopartikeln und/oder Mikropartikeln, besonders bevorzugt die wenigstens eine Monolage von Nanopartikeln und/oder Mikropartikeln, jeweils mit wenigstens einer Entspiegelungsschicht beschichtet, so umfasst diese bevorzugt alternierende diskrete Metalloxid-, Metallhydroxid- und/oder Metalloxidhydratschichten aus oder mit Eisen, Zinn, Nickel, Molybdän, Cer, Kupfer, Aluminium, Silizium, Zirkonium, Titan, Yttrium, Tantal, Neodym, Lanthan, Niob und/oder Praseodym. Die wenigstens eine Entspiegelungsschicht umfasst bevorzugt wenigstens eine Metalloxid-, Metallhydroxid- und/oder Metalloxidhydratschicht aus oder mit Silizium, wobei bevorzugt wenigstens eine Siliziumoxid-, Siliziumhydroxid- und/oder Siliziumoxidhydratschicht objektseitig und augenseitig jeweils die außenliegende Schicht der wenigstens einen Entspiegelungsschicht darstellt. Unter außenliegender Schicht wird in diesem Zusammenhang diejenige Schicht der Entspiegelungsschicht verstanden, welche sich in der Schichtenfolge am weitesten augenseitig bzw. am weitesten objektseitig befindet.

Die wenigstens eine Entspiegelungsschicht kann beispielsweise folgende Schichtenfolge von substratzugewandt zu substratabgewandt aufweisen:
a) Metalloxid, Metallhydroxid und/oder Metalloxidhydratschicht aus oder mit Titan,
b) Metalloxid, Metallhydroxid und/oder Metalloxidhydratschicht aus oder mit Silizium,
c) Metalloxid, Metallhydroxid und/oder Metalloxidhydratschicht aus oder mit Titan,
d) Metalloxid, Metallhydroxid und/oder Metalloxidhydratschicht aus oder mit Silizium,
e) Metalloxid, Metallhydroxid und/oder Metalloxidhydratschicht aus oder mit Titan,
f) Metalloxid, Metallhydroxid und/oder Metalloxidhydratschicht aus oder mit Silizium.
Die wenigstens eine Entspieglungsschicht kann weiterhin die in EP 2 437 084 A1, in den Figuren 3 und 5, jeweils die zwischen der superhydrohoben Schicht und der Hartlackschicht aufgezeigte Schichtenfolge und Schichtdicke aufweisen. Bevorzugt ist im Rahmen dieser Erfindung die dort jeweils an die Hartlackschicht angrenzende Schicht augenseitig und die jeweils an die superhydrophobe Schicht angrenzende Schicht objektseitig auf der Vorderfläche bzw. die dort jeweils an die Hartlackschicht angrenzende Schicht objektseitig und die jeweils an die superhydrophobe Schicht angrenzende Schicht augenseitig in der Schichtenfolge auf der Rückfläche angeordnet. Die Herstellung der wenigstens einen Entspiegelungsschicht erfolgt vorzugsweise mittels PVD-Verfahren. Nach Entfernen der Nanopartikel und/oder Mikropartikel umfasst die zu beschichtende Oberfläche die wenigstens eine Entspiegelungsschicht nur in denjenigen Teilbereichen der zu beschichtenden Oberfläche, welche während der Beschichtung mit der wenigstens einen Entspiegelungsschicht nicht mit Nanopartikeln und/oder Mikropartikeln maskiert und/oder welche während der Beschichtung mit der wenigstens einen Entspiegelungsschicht nicht von Nanopartikeln und/oder Mikropartikeln abgeschattet waren. Die zu beschichtende Oberfläche kann wenigstens eine Hartlackschicht, wenigstens eine Verspiegelungsschicht, wenigstens eine optisch fertig bearbeitete Fläche des Brillenglas-Halbfertigprodukts oder fertigen Brillenglases und/oder wenigstens eine nicht mit einem Brillenglas-Halbfertigprodukt, nicht mit einem fertiges Brillenglas oder nicht mit wenigstens einer Kunststofffolie verbundene Oberfläche eines Dünnstglases sein.

Wird die wenigstens eine Lage von Nanopartikeln und/oder Mikropartikeln, bevorzugt die wenigstens eine Monolage und/oder die wenigstens eine Doppelschicht jeweils von Nanopartikeln und/oder Mikropartikeln, besonders bevorzugt die wenigstens eine Monolage von Nanopartikeln und/oder Mikropartikeln, jeweils mit wenigstens einer Verspiegelungsschicht beschichtet, umfasst diese bevorzugt alternierende dielektrische Schichten im Sinne eines Bragg-Spiegels und/oder wenigstens eine semitransparente Metallschicht. Bei der Verspiegelungsschicht handelt es sich besonders bevorzugt um eine semitransparente Metallschicht. Die wenigstens eine semitransparente Metallschicht kann beispielsweise eine Aluminiumschicht, Chromschicht, Goldschicht und/oder eine Silberschicht umfassen. Die wenigstens eine semitransparente Metallschicht wird vorzugsweise mittels eines PVD-Verfahrens auf die wenigstens eine Lage von Nanopartikeln aufgebracht. Nach Entfernen der Nanopartikel und/oder Mikropartikel umfasst die zu beschichtende Oberfläche die wenigstens eine Verspiegelungsschicht nur in denjenigen Teilbereichen der zu beschichtenden Oberfläche, welche während der Beschichtung mit der wenigstens einen Verspiegelungsschicht nicht mit Nanopartikeln und/oder Mikropartikeln maskiert und/oder welche während der Beschichtung mit der wenigstens einen Verspiegelungsschicht nicht von Nanopartikeln und/oder Mikropartikeln abgeschattet waren. Die zu beschichtende Oberfläche kann wenigstens eine Hartlackschicht, wenigstens eine photochrome Schicht, wenigstens eine polarisierende Schicht, wenigstens eine optisch fertig bearbeitete Fläche des Brillenglas-Halbfertigprodukts oder fertigen Brillenglases und/oder wenigstens eine nicht mit einem Brillenglas-Halbfertigprodukt, nicht mit einem fertiges Brillenglas oder nicht mit wenigstens einer Kunststofffolie verbundene Oberfläche eines Dünnstglases sein.

Wird die wenigstens eine Lage von Nanopartikeln und/oder Mikropartikeln, bevorzugt die wenigstens eine Monolage und/oder die wenigstens eine Doppelschicht jeweils von Nanopartikeln und/oder Mikropartikeln, besonders bevorzugt die wenigstens eine Monolage von Nanopartikeln und/oder Mikropartikeln, jeweils mit wenigstens einer Antibeschlagsschicht beschichtet, umfasst diese bevorzugt ein Silanderivat gemäß EP 2 664 659 A1, besonders bevorzugt gemäß Anspruch 4 der EP 2 664 659 A1. Alternativ kann die wenigstens eine Antibeschlagsschicht auch gemäß dem in DE 10 2015 209 794 A1 beschriebenen Verfahren, insbesondere gemäß des in Anspruch 1 der DE 10 2015 209 794 A1 beschriebenen Verfahrens, hergestellt werden. Nach Entfernen der Nanopartikel und/oder Mikropartikel ist die wenigstens eine Antibeschlagsschicht nur in denjenigen Teilbereichen der zu beschichtenden Oberfläche zu finden, welche während der Beschichtung mit der wenigstens einen Antibeschlagsschicht nicht mit Nanopartikeln und/oder Mikropartikeln maskiert und/oder durch Nanopartikel und/oder Mikropartikel abgeschattet waren. Die zu beschichtende Oberfläche kann wenigstens eine Entspiegelungsschicht, bevorzugt die Metalloxid-, Metallhydroxid- und/oder Metalloxidhydratschicht aus oder mit Silizium der Entspiegelungsschicht, wenigstens eine optisch fertig bearbeitete Fläche des Brillenglas-Halbfertigprodukts oder des fertigen Brillenglases und/oder wenigstens eine nicht mit einem Brillenglas-Halbfertigprodukt, nicht mit einem fertiges Brillenglas oder nicht mit wenigstens einer Kunststofffolie verbundene Oberfläche eines Dünnstglases sein.

Wird die wenigstens eine Lage von Nanopartikeln und/oder Mikropartikeln, bevorzugt die wenigstens eine Monolage und/oder die wenigstens eine Doppelschicht jeweils von Nanopartikeln und/oder Mikropartikeln, besonders bevorzugt die wenigstens eine Monolage von Nanopartikeln und/oder Mikropartikeln, jeweils mit wenigstens einer Clean-Coat-Schicht beschichtet, umfasst diese vorzugsweise ein Material mit oleophoben und hydrophoben Eigenschaften, wie beispielsweise in EP 1 392 613 A1 offenbart, auf dem Wasser einen Kontaktwinkel von mehr als 90°, bevorzugt von mehr als 100° und besonders bevorzugt mehr als 110° einnimmt. Die wenigstens eine Clean-Coat-Schicht umfasst besonders bevorzugt eine fluororganische Schicht mit kovalenter Anbindung an das Substrat gemäß DE 198 48 591 A1, Anspruch 1, oder eine Schicht auf Basis von Perfluorpolyethern. Nach Entfernen der Nanopartikel und/oder Mikropartikel umfasst die zu beschichtende Oberfläche die wenigstens einen Clean-Coat-Schicht nur in denjenigen Teilbereichen der zu beschichtenden Oberfläche, welche während der Beschichtung mit der wenigstens einen Clean-Coat-Schicht nicht mit Nanopartikeln und/oder Mikropartikeln maskiert und/oder während der Beschichtung mit der wenigstens einen Clean-Coat-Schicht nicht von Nanopartikeln und/oder Mikropartikeln abgeschattet waren. Bei der zu beschichtenden Oberfläche kann es sich um wenigstens eine Entspiegelungsschicht, wenigstens eine optisch fertig bearbeitete Fläche des Brillenglas-Halbfertigprodukts oder des fertigen Brillenglases und/oder wenigstens wenigstens eine nicht mit einem Brillenglas-Halbfertigprodukt, nicht mit einem fertiges Brillenglas oder nicht mit wenigstens einer Kunststofffolie verbundene Oberfläche eines Dünnstglases handeln.

Die Entfernung der Nanopartikel und/oder Mikropartikel kann durch Abwaschen der hiermit belegten Oberfläche mit wenigstens einem Lösungsmittel erfolgen. Bei dem Lösungsmittel kann es sich hierbei um Wasser, einen Alkohol, wie beispielsweise Ethanol oder Isopropanol, oder um ein organisches Lösungsmittel, wie beispielsweise Aceton, Toluol, Pentanon oder Hexan, handeln.

Mit den Beschreibungen Entfernen der Nanopartikel und/oder Mikropartikel, Maskierung durch Nanopartikel und/oder Mikropartikel, Abschattung durch Nanopartikel und/oder Mikropartikel ist im Rahmen dieser Erfindung auch das Entfernen von, die Maskierung bzw. die Abschattung durch wenigstens einen Nanopartikel und/oder wenigstens einen Mikropartikel sowie das Entfernen von, die Maskierung bzw. die Abschattung durch einen einzigen Nanopartikel und/oder einen einzigen Mikropartikel umfasst.

Die maximale Schichtdicke der wenigstens einen Schicht, mit welcher die wenigstens eine Lage von Nanopartikeln und/oder Mikropartikeln beschichtet wird, ist bevorzugt kleiner als die mittlere Partikelgröße der in der wenigstens einen Lage vorliegenden Nanopartikel und/oder Mikropartikel. Umfasst die wenigstens eine Lage Nanopartikel und/oder Mikropartikel unterschiedlicher mittlerer Partikelgröße ist die mittlere Schichtdicke der wenigstens einen Schicht bevorzugt kleiner als die mittlere Partikelgröße der kleinsten Nanopartikel und/oder Mikropartikel der wenigstens einen Lage von Nanopartikeln und/oder Mikropartikeln. Bevorzugt beträgt die maximale Schichtdicke der wenigstens einen Schicht, mit welcher die wenigstens eine Lage von Nanopartikeln und/oder Mikropartikeln beschichtet wird, 75%, bevorzugt 50%, jeweils der mittleren Partikelgröße der in der wenigstens einen Lage vorliegenden kleinsten Nanopartikel und/oder Mikropartikel. Weiterhin bevorzugt beträgt die minimale Schichtdicke der wenigstens einen Schicht, mit welcher die wenigstens eine Lage von Nanopartikeln und/oder Mikropartikeln beschichtet wird, wenigstens 1 nm, bevorzugt wenigstens 2 nm. Die minimale und maximale Schichtdicke der wenigstens einen Schicht wird bevorzugt mittels einer rasterelektronenmikroskopischen Querschliffaufnahme bestimmt.

Die Oberfläche des Substrats kann ausgehend von der Oberfläche des Substrats wenigstens eine polarisierende Schicht, wenigstens eine farbgebende Schicht, wenigstens eine photochrome Schicht, wenigstens eine Hartlackschicht, wenigstens eine Entspiegelungsschicht und/oder wenigstens eine Clean-Coat-Schicht oder wenigstens eine Antibeschlagsschicht umfassen. Bei der Oberfläche des Substrats kann es sich um die optisch fertig bearbeitete Fläche des Brillenglas-Halbfertigprodukts oder des fertigen Brillenglases oder um die zu beschichtende Oberfläche eines Dünnstglases handeln. In vorstehend genannter Schichtenfolge ist die wenigstens Clean-Coat-Schicht oder die wenigstens eine Antibeschlagsschicht die am weitesten von der Oberfläche des Substrats entfernte Schicht. Die vorstehend genannte Schichtenfolge muss nicht jede Schicht der aufgeführten Schichten umfassen. Die vorstehend genannte Schichtenfolge kann sowohl auf der Vorderfläche als auch auf der Rückfläche des Substrats vorliegen, wobei die Schichtenfolge auf der Vorderfläche und auf der Rückfläche gleich oder verschieden voneinander sein kann. Jede der vorstehend genannten Schichten kann mit wenigstens einer Lage von Nanopartikeln und/oder Mikropartikeln belegt werden und diese wenigstens eine Lage von Nanopartikeln und/oder Mikropartikeln kann mit wenigstens einer der vorstehend genannten Schichten beschichtet werden, wobei bevorzugt die vorstehend genannte Schichtenfolge berücksichtigt wird. Wird die wenigstens eine Lage von Nanopartikeln und/oder Mikropartikeln mit wenigstens einer der vorstehend genannten Schichten beschichtet, beträgt deren minimale Schichtdicke bevorzugt wenigstens 1 nm und deren maximale Schichtdicke bevorzugt 75% der mittleren Partikelgröße der kleinsten Nanopartikel und/oder Mikropartikel der Lage. Wird die wenigstens eine Schicht nicht zur Beschichtung von wenigstens einer Lage von Nanopartikeln und/oder Mikropartikeln genutzt, gilt die Begrenzung für die maximale Schichtdicke nicht. Beispielsweise kann eine Entspiegelungsschicht dann eine Gesamtschichtdicke bevorzugt aus einem Bereich von 97 nm bis 2000 nm, weiter bevorzugt aus einem Bereich von 112 nm bis 1600 nm, weiter bevorzugt aus einem Bereich von 121 nm bis 1110 nm, besonders bevorzugt aus einem Bereich von 132 nm bis 760 nm und ganz besonders bevorzugt aus einem Bereich von 139 nm bis 496 nm oder eine Hartlackschicht eine mittlere Schichtdicke bevorzugt aus einem Bereich von 0,6 µm bis 7,1 µm, weiter bevorzugt aus einem Bereich von 0,8 µm bis 6,6 µm, besonders bevorzugt aus einem Bereich von 1,1 µm bis 5,8 µm und ganz besonders bevorzugt aus einem Bereich von 1,6 µm bis 4,9 µm aufweisen. Die Gesamtschichtdicke der Entspieglungsschicht und die mittlere Schichtdicke Hartlackschicht werden jeweils bevorzugt anhand einer rasterelektronenmikroskopischen Querschliffaufnahme bestimmt.

Anstelle oder zusätzlich zur Belegung der zu beschichtenden Oberfläche mit wenigstens einer Lage von Nanopartikeln und/oder Mikropartikeln können auf die zu beschichtende Oberfläche mittels einer Tintenstrahltinte einzelne Tröpfchen aufgebracht werden, die mit wenigstens einer Schicht beschichtet werden können. Nach Entfernen der Nanopartikel und/oder Mikropartikel und/oder der Tintenstrahltintentröpfchen kann die so erhaltene Oberfläche mit wenigstens einer weiteren Schicht beschichtet werden. Die hierfür einzusetzende Tintenstrahltinte kann beispielsweise wenigstens ein Wachs und/oder wenigstens ein Ormocer umfassen. Des Weiteren kann die einzusetzende Tintenstrahltinte Ormocer, Ormocore, Ormoclad, Ormoclear, Epoclad, Positiv-Photoresiste und/oder Negativ-Photoresiste, jeweils Firma Microresist GmbH umfassen.

Bei einer bevorzugten Ausführungsform der Erfindung wird eine unbeschichtete zu beschichtende Oberfläche, also eine unbeschichtete optisch fertig bearbeitete Fläche des Brillenglas-Halbfertigprodukts oder des fertigen Brillenglases oder eine unbeschichtete außenliegende Oberfläche eines Dünnstglases, mit wenigstens einer Lage von Nanopartikeln und/oder Mikropartikeln belegt, diese wenigstens eine Lage von Nanopartikeln und/oder Mikropartikeln mit wenigstens einer Entspiegelungsschicht und/oder mit wenigstens einer Clean-Coat-Schicht beschichtet und abschließend die Nanopartikel und/oder Mikropartikel aus der wenigstens einen Entspiegelungsschicht und/oder mit wenigstens einen Clean-Coat-Schicht entfernt. Die unbeschichtete zu beschichtende Oberfläche kann die Vorderfläche und/oder die Rückfläche des Substrats sein.

Bei einer weiteren bevorzugten Ausführungsform der Erfindung wird eine mit wenigstens einer Entspiegelungsschicht belegte, zu beschichtende Oberfläche, mit wenigstens einer Lage von Nanopartikeln und/oder Mikropartikeln belegt, diese wenigstens eine Lage von Nanopartikeln und/oder Mikropartikeln mit wenigstens einer Entspiegelungsschicht und/oder mit wenigstens einer Clean-Coat-Schicht beschichtet und abschließend die Nanopartikel und/oder Mikropartikel aus der wenigstens einen Entspiegelungsschicht und/oder mit wenigstens einen Clean-Coat-Schicht entfernt. Die mit wenigstens einer Entspiegelungsschicht belegte, zu beschichtende Oberfläche kann die Vorderfläche und/oder die Rückfläche des Substrats sein.

Bei einer weiteren Ausführungsform der Erfindung werden die Nanopartikel und/oder Mikropartikel nicht entfernt. Insbesondere bei der Verwendung von Janus-Partikeln werden diese mit wenigstens einer Schicht beschichtet und nicht wieder aus dieser wenigstens einen Schicht entfernt. Es ist auch möglich, Janus-Partikel und andere Nanopartikel und/oder Mikropartikel auf derselben Oberfläche des Substrats oder auf verschiedenen Oberflächen des Substrats, wobei nur die anderen Nanopartikel und/oder Mikropartikel wieder entfernt werden. Beispielsweise kann die zu beschichtende Oberfläche der Rückfläche wenigstens eine Lage aus Janus-Partikel und die zu beschichtende Oberfläche der Vorderfläche wenigstens eine Lage aus anderen Nanopartikel und/oder Mikropartikel umfassen. Nach Beschichten beider Lagen mit wenigstens einer Schicht, werden dann bevorzugt nur die anderen Nanopartikel und/oder Mikropartikel wieder entfernt.
Werden beispielsweise Nanopartikel und/oder Mikropartikel basierend auf wenigstens einem Metall nicht wieder entfernt, können diese, sofern sie nur mit wenigstens einer sehr dünnen Schicht beschichtet werden, ihren metallischen Glanz der Beschichtung verleihen. Gleiches gilt für eingefärbte Nanopartikel und/oder Mikropartikel, deren Farbe dann der Beschichtung innewohnt.

Die Erfindung soll anhand nachfolgender Beispiele näher erläutert werden.

### Herstellung der erfindungsgemäßen Brillengläser

Für die Herstellung der erfindungsgemäßen Beispiele wurde als Entspiegelungsschicht die in EP 2 437 084 A1, in den Figuren 3 und 5, jeweils die zwischen der superhydrohoben Schicht und der Hartlackschicht aufgezeigte Entspiegelungsschicht mit der dort aufgeführten Schichtenfolge und Schichtdicke eingesetzt. Auf der Vorderfläche ist die dort jeweils an die Hartlackschicht angrenzende Schicht augenseitig und die jeweils an die superhydrophobe Schicht angrenzende Schicht objektseitig angeordnet. Als Clean-Coat-Schicht wurde die in DE 198 48 591 A1, Beispiel 1, offenbarte Wirksubstanz eingesetzt. Als Hartlackschicht wurde die in EP 2 578 649 A1, Beispiel 2 offenbarte Schicht eingesetzt.

### Beispiel 1

Es wurde ein unbeschichtetes Substrat, basierend auf Diallyldiglycolcarbonat mit einem Brechungsindex n_{D} = 1,5, Firma Carl Zeiss Vision GmbH, für 180 Sekunden mit Plasma, Firma Pink GmbH, Plasma-System V80-G, aktiviert. Anschließend wurden 100µL einer 10 Gew.-%igen wässrigen Polystyrol-Mikropartikelsuspension, mittlere Partikelgröße der Polystyrol Mikropartikel: 5 µm, Firma Merck KGaA, 1:1 mit demineralisiertem Wasser verdünnt und auf der Vorderfläche des mit Plasma voraktivierten Substrates homogen verteilt. Hierzu wurde das Substrat in kreisförmigen Bewegungen bewegt. Zum Trocknen der Mikropartikelsuspension auf der Vorderfläche des Substrates wurde das Substrat auf den multifunktionalen 3D-Schüttler PS-M3D, Firma Grant Instruments, gelegt, welcher sich solange drehte, bis die Mikropartikelsuspension auf der Vorderfläche des Substrates getrocknet war. Es wurde auf der Vorderfläche des Substrats eine Monolage aus Mikropartikeln erhalten, welche anschließend mit einer Entspiegelungsschicht mit einer Gesamtschichtdicke von 200 nm und einer Clean-Coat-Schicht überbeschichtet wurde. Die Mikropartikel wurden durch Abspülen der Vorderfläche des Substrats mit demineralisiertem Wasser entfernt. Es wurde ein Brillenglas erhalten, welches auf der Vorderfläche eine mikrostrukturierte Schicht aufwies.

### Beispiel 2

Es wurde ein mit einer Hartlackschicht beschichtetes Substrat, basierend auf Diallyldiglycolcarbonat mit einem Brechungsindex n_{D} = 1,5, Firma Carl Zeiss Vision GmbH, für 180 Sekunden mit Plasma, Firma Pink GmbH, Plasma-System V80-G, aktiviert. Anschließend wurden 100µL einer 10 Gew.-%igen wässrigen Polystyrol-Mikropartikelsuspension, mittlere Partikelgröße der Polystyrol Mikropartikel: 5 µm, Firma Merck KGaA, 1:1 mit Ethanol zur Analyse verdünnt und auf der Vorderfläche des mit Plasma voraktivierten Substrates homogen verteilt. Hierzu wurde das Substrat in kreisförmigen Bewegungen bewegt. Zum Trocknen der Mikropartikelsuspension auf der Vorderfläche des Substrates, wurde das Substrat auf den multifunktionalen 3D-Schüttler, PS-M3D, Firma Grant Instruments gelegt, welcher sich solange drehte, bis die Mikropartikelsuspension auf der Vorderfläche des Substrates getrocknet war. Es wurde auf der Vorderfläche des Substrats eine Monolage aus Mikropartikeln erhalten, welche anschließend mit einer Entspiegelungsschicht mit einer Gesamtschichtdicke von 180 nm und einer Clean-Coat-Schicht überbeschichtet wurde. Die Mikropartikel wurden durch Abspülen der Vorderfläche des Substrats mit demineralisiertem Wasser entfernt. Es wurde ein Brillenglas erhalten, welches auf der Vorderfläche eine mikrostrukturierte Schicht aufwies.

### Beispiel 3

Es wurde ein mit einer Entspiegelungsschicht beschichtetes Substrat, basierend auf Diallyldiglycolcarbonat mit einem Brechungsindex n_{D} = 1,5, Firma Carl Zeiss Vision GmbH, für 180 Sekunden mit Plasma, Pink GmbH, Plasma-System V80-G, aktiviert. Anschließend wurden 100µL einer wässrigen 10 Gew.-%igen Polystyrol-Mikropartikelsuspension mit einer mittleren Partikelgröße der Polystyrol Mikropartikel von 5 µm, Firma Merck KGaA, 1:1 mit Methanol zur Analyse verdünnt und auf der Vorderfläche des mit Plasma voraktivierten Substrates homogen verteilt. Hierzu wurde das Substrat in kreisförmigen Bewegungen bewegt. Zum Trocknen der Mikropartikelsuspension auf der Vorderfläche des Substrates, wurde das Substrat auf den multifunktionalen 3D-Schüttler, PS-M3D, Firma Grant Instruments gelegt, welcher sich solange drehte, bis die Mikropartikelsuspension auf der Vorderfläche des Substrates getrocknet war. Es wurde auf der Vorderfläche des Substrats eine Monolage aus Mikropartikeln erhalten, welche anschließend mit einer Entspiegelungsschicht mit einer Gesamtschichtdicke von 160 nm und einer Clean-Coat-Schicht überbeschichtet wurde. Die Mikropartikel wurden durch Abspülen der Vorderfläche des Substrats mit demineralisiertem Wasser entfernt. Es wurde ein Brillenglas erhalten, welches auf der Vorderfläche eine mikrostrukturierte Schicht aufwies.

### Beispiel 4

Es wurde ein unbeschichtetes Substrat, basierend auf Diallyldiglycolcarbonat mit einem Brechungsindex n_{D} = 1,5, Firma Carl Zeiss Vision GmbH, für 180 Sekunden mit Plasma, Firma Pink GmbH, Plasma-System V80-G, aktiviert. Anschließend wurden 100µL einer 10 Gew.-%igen wässrigen Polystyrol-Mikropartikelsuspension, mittlere Partikelgröße der Polystyrol Mikropartikel: 5 µm, Firma Merck KGaA, 1:1 mit demineralisiertem Wasser verdünnt und auf der Vorderfläche des mit Plasma voraktivierten Substrates homogen verteilt. Hierzu wurde das Substrat in kreisförmigen Bewegungen bewegt. Zum Trocknen der Mikropartikelsuspension auf der Vorderfläche des Substrates wurde das Substrat auf den multifunktionalen 3D-Schüttler PS-M3D, Firma Grant Instruments, gelegt, welcher sich solange drehte, bis die Mikropartikelsuspension auf der Vorderfläche des Substrates getrocknet war. Es wurde auf der Vorderfläche des Substrats eine Monolage aus Mikropartikeln erhalten, welche anschließend mit einer Chromschicht mit einer mittleren Schichtdicke von 50 nm und einer Clean-Coat-Schicht überbeschichtet wurde. Die Mikropartikel wurden durch Abspülen der Vorderfläche des Substrats mit demineralisiertem Wasser entfernt. Es wurde ein Brillenglas erhalten, welches auf der Vorderfläche eine mikrostrukturierte Schicht aufwies.

### Beispiel 5

Es wurde ein mit einer Hartlackschicht beschichtetes Substrat, basierend auf Diallyldiglycolcarbonat mit einem Brechungsindex n_{D} = 1,5, Firma Carl Zeiss Vision GmbH, für 180 Sekunden mit Plasma, Firma Pink GmbH, Plasma-System V80-G, aktiviert. Anschließend wurden 50 µL einer 10 Gew.-%igen wässrigen Polystyrol-Mikropartikelsuspension, mittlere Partikelgröße der Polystyrol Mikropartikel: 5 µm, und 50 µL einer 10 Gew.-%igen wässrigen Polystyrol-Mikropartikelsuspension, mittlere Partikelgröße der Polystyrol Mikropartikel: 1 µm, jeweils Firma Merck KGaA, auf der Vorderfläche des mit Plasma voraktivierten Substrates homogen verteilt. Hierzu wurde das Substrat in kreisförmigen Bewegungen bewegt. Zum Trocknen der Mikropartikelsuspension auf der Vorderfläche des Substrates wurde das Substrat auf den multifunktionalen 3D-Schüttler PS-M3D, Firma Grant Instruments, gelegt, welcher sich solange drehte, bis die Mikropartikelsuspension auf der Vorderfläche des Substrates getrocknet war. Es wurde auf der Vorderfläche des Substrats eine Monolage aus Mikropartikeln erhalten, welche anschließend mit einer Entspiegelungsschicht mit einer Gesamtschichtdicke von 140 nm und einer Clean-Coat-Schicht überbeschichtet wurde. Die Mikropartikel wurden durch Abspülen der Vorderfläche des Substrats mit demineralisiertem Wasser entfernt. Es wurde ein Brillenglas erhalten, welches auf der Vorderfläche eine mikrostrukturierte Schicht aufwies.

### Beispiel 6

Es wurde ein mit einer Hartlackschicht beschichtetes Substrat, basierend auf Diallyldiglycolcarbonat mit einem Brechungsindex n_{D} = 1,5, Firma Carl Zeiss Vision GmbH, für 180 Sekunden mit Plasma, Firma Pink GmbH, Plasma-System V80-G, aktiviert. Anschließend wurden 100µL einer 1:1 Mikropartikelsuspension, basierend Polystyrol-Mikropartikeln mit einer mittleren Partikelgröße von 5 µm, welche 10 Gew.-%ig in Wasser vorlagen und ebenfalls basierend auf Siliziumoxid-Nanopartikeln mit einer mittleren Partikelgröße von 200 nm, welche 10 Gew.-%ig in Ethanol vorlagen, jeweils von der Firma Merck KGaA, auf der Vorderfläche des mit Plasma voraktivierten Substrates homogen verteilt. Hierzu wurde das Substrat in kreisförmigen Bewegungen bewegt. Zum Trocknen der Mikropartikelsuspension auf der Vorderfläche des Substrates wurde das Substrat auf den multifunktionalen 3D-Schüttler PS-M3D, Firma Grant Instruments, gelegt, welcher sich solange drehte, bis die Mikropartikelsuspension auf der Vorderfläche des Substrates getrocknet war. Es wurde auf der Vorderfläche des Substrats eine Monolage aus Nanopartikel und Mikropartikeln erhalten, welche anschließend mit einer Entspiegelungsschicht mit einer Gesamtschichtdicke von 120 nm und einer Clean-Coat-Schicht überbeschichtet wurde. Die Mikropartikel wurden durch Abspülen der Vorderfläche des Substrats mit demineralisiertem Wasser entfernt. Es wurde ein Brillenglas erhalten, welches auf der Vorderfläche eine nano- und mikrostrukturierte Schicht aufwies.

### Beispiel 7

Es wurde ein unbeschichtetes Substrat, basierend auf Diallyldiglycolcarbonat mit einem Brechungsindex n_{D} = 1,5, Firma Carl Zeiss Vision GmbH, für 180 Sekunden mit Plasma, Firma Pink GmbH, Plasma-System V80-G, aktiviert. Anschließend wurden 100µL einer 10 Gew.-%igen wässrigen Polystyrol-Mikropartikelsuspension, mittlere Partikelgröße der Polystyrol Mikropartikel: 5 µm, Firma Merck KGaA, auf der Vorderfläche des mit Plasma voraktivierten Substrates homogen verteilt. Hierzu wurde das Substrat in kreisförmigen Bewegungen bewegt. Zum Trocknen der Mikropartikelsuspension auf der Vorderfläche des Substrates wurde das Substrat auf den multifunktionalen 3D-Schüttler PS-M3D, Firma Grant Instruments, gelegt, welcher sich solange drehte, bis die Mikropartikelsuspension auf der Vorderfläche des Substrates getrocknet war. Es wurde auf der Vorderfläche des Substrats eine Monolage aus Mikropartikeln erhalten, welche anschließend mit einer Siliziumdioxidschicht mit einer mittleren Schichtdicke von 100 nm überbeschichtet wurde. Die Mikropartikel wurden durch Abspülen der Vorderfläche des Substrats mit demineralisiertem Wasser entfernt. Es wurde ein Brillenglas erhalten, welches auf der Vorderfläche eine mikrostrukturierte Schicht aufwies.

### Beispiel 8

Es wurde ein mit einer Entspiegelungsschicht beschichtetes Substrat, basierend auf Diallyldiglycolcarbonat mit einem Brechungsindex n_{D} = 1,5, Firma Carl Zeiss Vision GmbH, mit einer Tintenstrahltinte auf Wachsbasis mit einem Wabenmuster bedruckt und für 180 Sekunden mit Plasma, Pink GmbH, Plasma-System V80-G, aktiviert. Anschließend wurden 100µL einer 10 Gew.-%igen wässrigen Polystyrol-Mikropartikelsuspension, mittlere Partikelgröße der Polystyrol Mikropartikel: 1 µm, Firma Merck KGaA, auf der Vorderfläche des mit Plasma voraktivierten Substrates homogen verteilt. Hierzu wurde das Substrat in kreisförmigen Bewegungen bewegt. Zum Trocknen der Mikropartikelsuspension auf der Vorderfläche des Substrates wurde das Substrat auf den multifunktionalen 3D-Schüttler PS-M3D, Firma Grant Instruments, gelegt, welcher sich solange drehte, bis die Mikropartikelsuspension auf der Vorderfläche des Substrates getrocknet war. Es wurde auf der Vorderfläche des Substrats eine Monolage aus Mikropartikeln erhalten, welche anschließend mit einer Siliziumdioxidschicht mit einer mittleren Schichtdicke von 100 nm überbeschichtet wurde. Die Mikropartikel wurden durch Abspülen der Vorderfläche des Substrats mit demineralisiertem Wasser entfernt. Es wurde ein Brillenglas erhalten, welches auf der Vorderfläche eine mikrostrukturierte Schicht aufwies.

### Beispiel 9

Es wurde ein mit einer Hartlackschicht beschichtetes Substrat, basierend auf Diallyldiglycolcarbonat mit einem Brechungsindex n_{D} = 1,5, Firma Carl Zeiss Vision GmbH, für 180 Sekunden mit Plasma, Firma Pink GmbH, Plasma-System V80-G, aktiviert. Anschließend wurden 100µL einer 10 Gew.-%igen wässrigen Polystyrol-Nanopartikelsuspension, mittlere Partikelgröße der Polystyrol Nanopartikel: 200 nm, Firma Merck KGaA, auf der Vorderfläche des mit Plasma voraktivierten Substrates homogen verteilt. Hierzu wurde das Substrat in kreisförmigen Bewegungen bewegt. Zum Trocknen der Nanopartikelsuspension auf der Vorderfläche des Substrates wurde das Substrat auf den multifunktionalen 3D-Schüttler PS-M3D, Firma Grant Instruments, gelegt, welcher sich solange drehte, bis die Nanopartikelsuspension auf der Vorderfläche des Substrates getrocknet war. Es wurde auf der Vorderfläche des Substrats eine Monolage aus Nanopartikeln erhalten, welche anschließend mit einer Titandioxidschicht mit einer mittleren Schichtdicke von 100 nm überbeschichtet wurde. Die Mikropartikel wurden durch Abspülen der Vorderfläche des Substrats mit demineralisiertem Wasser entfernt. Es wurde ein Brillenglas erhalten, welches auf der Vorderfläche eine nanostrukturierte Schicht aufwies.

### Beispiel 10

Es wurde ein mit einer Clean-Coat beschichtetes Substrat, basierend auf Diallyldiglycolcarbonat mit einem Brechungsindex n_{D} = 1,5, Firma Carl Zeiss Vision GmbH, für 180 Sekunden mit Plasma, Pink GmbH, Plasma-System V80-G, aktiviert. Anschließend wurden 100µL einer 10 Gew.-%igen wässrigen Polystyrol-Mikropartikelsuspension, mittlere Partikelgröße der Polystyrol Mikropartikel: 5 µm, Firma Merck KGaA, auf der Vorderfläche des mit Plasma voraktivierten Substrates homogen verteilt. Hierzu wurde das Substrat in kreisförmigen Bewegungen bewegt. Zum Trocknen der Mikropartikelsuspension auf der Vorderfläche des Substrates wurde das Substrat auf den multifunktionalen 3D-Schüttler PS-M3D, Firma Grant Instruments, gelegt, welcher sich solange drehte, bis die Mikropartikelsuspension auf der Vorderfläche des Substrates getrocknet war. Es wurde auf der Vorderfläche des Substrats eine Monolage aus Mikropartikeln erhalten, welche anschließend mit einer Chromschicht mit einer mittleren Schichtdicke von 27 nm überbeschichtet wurde. Die Mikropartikel wurden durch Abspülen der Vorderfläche des Substrats mit demineralisiertem Wasser entfernt. Es wurde ein Brillenglas erhalten, welches auf der Vorderfläche eine mikrostrukturierte Schicht aufwies.

## Patentansprüche

1. Brillenglas umfassend wenigstens ein Substrat und wenigstens eine nanostrukturierte und/oder mikrostrukturierte Schicht.

2. Brillenglas nach Anspruch 1, **dadurch gekennzeichnet, dass** die wenigstens eine nanostrukturierte und/oder mikrostrukturierte Schicht als Zwischenraumstruktur auf einer zu beschichtenden Oberfläche vorliegt.

3. Brillenglas nach einem der vorstehenden Ansprüche, **dadurch gekennzeichnet, dass** die Zwischenraumstruktur erhältlich ist durch Maskierung und/oder Abschattung der zu beschichtenden Oberfläche mit wenigstens einer Lage von Nanopartikeln und/oder Mikropartikeln, Beschichtung der wenigstens einen Lage von Nanopartikeln und/oder Mikropartikeln mit wenigstens einer Schicht und Entfernen der Nanopartikel und/oder Mikropartikel aus dieser wenigstens einen Schicht.

4. Brillenglas nach einem der vorstehenden Ansprüche, **dadurch gekennzeichnet, dass** die zu beschichtende Oberfläche ausgewählt aus der Gruppe bestehend aus der optisch fertig bearbeiteten Fläche des Brillenglas-Halbfertigprodukts, einer der fertig bearbeiteten optischen Flächen des fertigen Brillenglases, der zu beschichtenden Oberfläche eines Dünnstglases ist.

5. Brillenglas nach Anspruch 4, **dadurch gekennzeichnet, dass** die zu beschichtende Oberfläche mit einer Beschichtung ausgewählt aus der Gruppe bestehend aus wenigstens einer polarisierenden Schicht, wenigstens einer farbgebenden Schicht, wenigstens einer photochromen Schicht, wenigstens einer Hartlackschicht, wenigstens einer Entspiegelungsschicht, wenigstens einer Clean-Coat-Schicht und wenigstens eine Antibeschlagsschicht ausgewählt ist.

6. Brillenglas nach einem der vorstehenden Ansprüche, **dadurch gekennzeichnet, dass** die zu beschichtende Oberfläche komplett oder teilweise mit wenigstens einer Lage von Nanopartikeln und/oder Mikropartikeln belegt ist.

7. Brillenglas nach einem der vorstehenden Ansprüche, **dadurch gekennzeichnet, dass** die wenigstens eine Lage von Nanopartikeln und/oder Mikropartikeln eine Doppelschicht oder eine Monolage ist.

8. Brillenglas nach einem der vorstehenden Ansprüche, **dadurch gekennzeichnet, dass** die Nanopartikel und/oder Mikropartikel einer Monolage die zu beschichtende Oberfläche vollständig oder nicht vollständig belegen.

9. Brillenglas nach einem der vorstehenden Ansprüche, **dadurch gekennzeichnet, dass** die Nanopartikel und/oder Mikropartikel Kern-Hülle-Partikel, Janus-Partikel, Trägerpartikel, Nanopartikel und/oder Mikropartikel basierend auf wenigstens einem polymeren Material, Nanopartikel und/oder Mikropartikel basierend auf wenigstens einem Metalloxid, Metallhydroxid und/oder Metalloxidhydrat und/oder Nanopartikel und/oder Mikropartikel basierend auf wenigstens einem Metall sind.

10. Brillenglas nach einem der vorstehenden Ansprüche, **dadurch gekennzeichnet, dass** die wenigstens eine Schicht aus der Gruppe bestehend aus wenigstens einer einzelnen Schicht eines Metalloxids, Metallhydroxids und/oder Metalloxidhydrats aus oder mit Silizium, bevorzugt einer einzelnen SiO₂-Schicht oder aus oder mit Titan, bevorzugt einer einzelnen TiO₂-Schicht oder aus oder mit Zirkonium, bevorzugt einer einzelnen ZrO₂-Schicht, wenigstens polarisierenden Schicht, wenigstens einer farbgebenden Schicht, wenigstens einer photochromen Schicht, wenigstens einer Hartlackschicht, wenigstens einer elektrisch leitfähigen oder elektrisch halbleitenden Schicht, wenigstens einer Entspiegelungsschicht, wenigstens einer Verspiegelungsschicht, wenigstens einer Antibeschlagsschicht und wenigstens einer Clean-Coat-Schicht ausgewählt ist.

11. Brillenglas nach einem der vorstehenden Ansprüche, **dadurch gekennzeichnet, dass** maximale Schichtdicke der wenigstens einen Schicht 75% der mittleren Partikelgröße der in der wenigstens einen Lage vorliegenden kleinsten Nanopartikel und/oder Mikropartikel ist.

12. Brillenglas nach einem der vorstehenden Ansprüche, **dadurch gekennzeichnet, dass** die minimale Schichtdicke der wenigstens einen Schicht wenigstens 1 nm beträgt.

13. Verfahren zur Herstellung eines Brillenglases umfassend wenigstens ein Substrat und wenigstens eine nanostrukturierte und/oder mikrostrukturierte Schicht, wobei das Verfahren die folgenden Schritte umfasst:
a) Bereitstellen eines Substrats mit einer zu beschichtenden Oberfläche,
b) Maskieren der zu beschichtenden Oberfläche mit wenigstens einer Lage von Nanopartikeln und/oder Mikropartikeln
c) Beschichten der wenigstens einen Lage von Nanopartikeln und/oder Mikropartikeln mit wenigstens einer Schicht,
d) Entfernen der Nanopartikel und/oder Mikropartikel aus der wenigstens einen Schicht,
e) optional Beschichten der nach Schritt d) erhaltenen Oberfläche mit wenigstens einer weiteren Schicht, welche nicht identisch der wenigstens einen Schicht aus Schritt d) ist.

14. Verfahren nach Anspruch 12, **dadurch gekennzeichnet, dass** ein Teil der wenigstens einen Lage von Nanopartikeln und/oder Mikropartikeln abgedeckt ist und der nicht abgedeckte Teil der wenigstens einen Lage von Nanopartikeln und/oder Mikropartikeln mit Plasma behandelt wird.

15. Verwendung einer nanostrukturierte und/oder mikrostrukturierte Schicht zur Funktionalisierung eines Brillenglases.
